# EUROPÄISCHE PATENTANMELDUNG

(11) **EP 4 700 631 A1**
(43) Veröffentlichungstag der Anmeldung: **25.02.2026**
(21) Anmeldenummer: 24195740.6
(22) Anmeldetag: 21.08.2024
(51) Int. Cl.: G06F 21/64, H04L 9/32, H04L 9/00

(54) **VERFAHREN ZUM SICHEREN ENTFERNEN VON BLÖCKEN AUS EINER BESTEHENDEN BLOCKCHAIN**

(71) Anmelder: Eagle PMX AG, 9001 St. Gallen (CH)
(72) Erfinder: Götz, Pierre, St. Gallen (CH); Tafelski, Melanie, St. Gallen (CH); Knallinger, Manfred, St. Gallen (CH)
(74) Vertreter: Reich, Jochen

(57) **Zusammenfassung**

Die vorliegende Erfindung betrifft ein Verfahren zum sicheren Entfernen von Blöcken aus einer bestehenden Blockchain in einer abgeschlossenen Infrastruktur wie zum Beispiel einem Firmennetzwerk. Das vorgeschlagene Verfahren schafft den Vorteil, dass Einträge aus der verketteten Liste entfernt werden können, ohne, dass hier die weitere Integrität der Kette gefährdet ist. Blockchains sehen grundsätzlich nicht vor, dass Blöcke aus der Datenstruktur entfernt werden, was durch die redundante Speicherung verhindert wird. Die vorliegende Erfindung überwindet diesen Nachteil und schafft zudem einen Mechanismus, der es erlaubt die Datensätze nachträglich ggf. wieder herzustellen. Die Erfindung ist ferner gerichtet auf eine entsprechend eingerichtete Systemanordnung. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

## Beschreibung

Die vorliegende Erfindung betrifft ein Verfahren zum sicheren Entfernen von Blöcken aus einer bestehenden Blockchain in einer abgeschlossenen Infrastruktur wie zum Beispiel einem Firmennetzwerk. Das vorgeschlagene Verfahren schafft den Vorteil, dass Einträge aus der verketteten Liste entfernt werden können, ohne, dass hier die weitere Integrität der Kette gefährdet ist. Blockchains sehen grundsätzlich nicht vor, dass Blöcke aus der Datenstruktur entfernt werden, was durch die redundante Speicherung verhindert wird. Die vorliegende Erfindung überwindet diesen Nachteil und schafft zudem einen Mechanismus, der es erlaubt die Datensätze nachträglich ggf. wieder herzustellen. Die Erfindung ist ferner gerichtet auf eine entsprechend eingerichtete Systemanordnung. Ferner wird ein Computerprogrammprodukt mit Steuerbefehlen vorgeschlagen, welche das vorgeschlagene Verfahren implementieren beziehungsweise die vorgeschlagene Vorrichtung und Anordnung betreiben.

Die vorliegende Erfindung betrifft die Blockchain-Technologie, insbesondere Verfahren und Systeme zur nachträglichen Löschung von Blöcken innerhalb einer Blockchain. Dies ist eine Notfalltechnologie, welche es ermöglicht, mit verschlüsselten Dateien, unwiederbringlich zu zerstören. Die vorliegende Erfindung stellt ein Verfahren und ein System zur Verfügung, das es ermöglicht, Blöcke in einer Blockchain nachträglich zu löschen, ohne die Integrität der verbleibenden Blockchain zu gefährden. Dies wird durch die Einführung einer speziellen, löschbaren Blockstruktur und eines Löschprotokolls erreicht.

Eine Blockchain ist generell bekannt. Eine Blockchain kann als eine spezielle Form einer verketteten Liste beschrieben werden, bei der jeder Block in der Kette nicht nur die Daten, sondern auch einen Hash-Wert des vorherigen Blocks enthält. Dieser Hash fungiert als Zeiger, der jeden Block eindeutig mit seinem Vorgänger verknüpft. Die Verkettung erfolgt durch kryptografische Hashes, die auf den Inhalten der Blöcke basieren. Ändert sich der Inhalt eines Blocks, ändert sich auch sein Hash, was wiederum den Hash des nächsten Blocks ungültig macht. Diese Struktur macht die Blockchain besonders resistent gegen Manipulation, da jede Änderung in einem Block die gesamte Kette beeinflussen würde.

Die Blockchain-Technologie gemäß dem Stand der Technik ist für ihre Unveränderlichkeit bekannt, was bedeutet, dass einmal in die Blockchain eingefügte Daten nicht mehr gelöscht oder geändert werden können. Diese Eigenschaft ist von entscheidender Bedeutung für die Integrität und Sicherheit der Daten. Es gibt jedoch Anwendungsfälle, in denen die Möglichkeit, bestimmte Blöcke nachträglich zu löschen, von Vorteil wäre, beispielsweise um technischen Anforderungen zu genügen oder irrtümlich eingetragene Daten zu korrigieren, oder aber auch, Daten zu löschen, welche bei einer Attacke in Hände krimineller Dritte gelangt sind.

Der aktuelle Stand der Technik in der Verschlüsselung von Cloud-Systemen umfasst verschiedene Ansätze und Technologien, die zusammenarbeiten, um Daten sowohl in Ruhe als auch während der Übertragung zu schützen. Hier sind einige Schlüsselaspekte:
Ende-zu-Ende-Verschlüsselung: Daten sollten sowohl während der Übertragung als auch in Ruhe verschlüsselt sein. Ende-zu-Ende-Verschlüsselung gewährleistet, dass nur autorisierte Benutzer die Daten entschlüsseln können, selbst wenn sie in der Cloud gespeichert sind oder zwischen Cloud-Diensten übertragen werden.

Starke Verschlüsselungsalgorithmen: Moderne Cloud-Systeme verwenden starke Verschlüsselungsalgorithmen wie AES (Advanced Encryption Standard) mit langen Schlüssellängen (z. B. 256 Bit). Diese Algorithmen bieten einen hohen Grad an Sicherheit und Widerstandsfähigkeit gegenüber Angriffen.

Schlüsselmanagement: Ein effektives Schlüsselmanagement ist entscheidend, um den sicheren Austausch von Verschlüsselungsschlüsseln zu gewährleisten. Dies beinhaltet die sichere Generierung, Speicherung, Rotation und Löschung von Schlüsseln. Verschiedene Techniken wie Key Management as a Service (KMaaS) oder Hardware Security Modules (HSMs) können eingesetzt werden, um Schlüssel sicher zu verwalten.

Multi-Faktor-Authentifizierung (MFA): Neben der Verschlüsselung ist die Authentifizierung ein wichtiger Aspekt der Sicherheit. MFA erfordert mehr als nur ein Passwort zur Authentifizierung eines Benutzers, was die Sicherheit erheblich verbessert.

Data Loss Prevention (DLP): Dies ist eine Reihe von Technologien und Prozessen, die sicherstellen, dass sensible Daten nicht unautorisiert in die Cloud gelangen oder aus der Cloud austreten.

Zero-Knowledge-Proof-Techniken: Diese Techniken ermöglichen es einem Dienstanbieter, Daten zu verarbeiten, ohne den Inhalt zu kennen. Zum Beispiel können Zero-Knowledge-Proof-Techniken verwendet werden, um Suchanfragen in verschlüsselten Datenbanken auszuführen, ohne die Daten selbst preiszugeben.

Homomorphe Verschlüsselung: Dies ist eine fortgeschrittene Technik, die es erlaubt, Operationen auf verschlüsselten Daten direkt durchzuführen, ohne sie zu entschlüsseln. Dies ermöglicht es, Berechnungen in der Cloud durchzuführen, während die Privatsphäre der Daten erhalten bleibt.

Allerdings ergeben sich bei den derzeitigen Möglichkeiten gemäß dem Stand der Technik die Daten in der Cloud zu sichern auch erhebliche Nachteile bzw. Probleme:
Schlüsselmanagement: Ein effektives Schlüsselmanagement ist entscheidend, aber auch schwierig. Die sichere Generierung, Speicherung, Rotation und Löschung von Schlüsseln erfordert spezielle Aufmerksamkeit. Ein Verlust von Verschlüsselungsschlüsseln kann zu einem dauerhaften Datenverlust führen, während ein unautorisiertes Erlangen von Schlüsseln die gesamte Verschlüsselungsbemühung zu Nichte machen kann. Dies ist bereits mehrfach bei großen Anbietern passiert.

Komplexität: Die Implementierung und Verwaltung von Verschlüsselungssystemen in der Cloud kann komplex sein und erfordert oft spezialisierte Kenntnisse und Ressourcen. Unternehmen müssen sich mit verschiedenen Technologien, Standards und Best Practices vertraut machen, um eine angemessene Sicherheit zu gewährleisten.

Zugriffskontrolle und Datenanalyse: Während die Verschlüsselung den Datenschutz verbessert, kann sie auch die Fähigkeit zur Datenanalyse und -verarbeitung beeinträchtigen. Der Zugriff auf verschlüsselte Daten zur Analyse oder Verarbeitung erfordert spezielle Techniken wie homomorphe Verschlüsselung oder Zero-Knowledge-Proof, die zusätzliche Komplexität mit sich bringen können.

Regulatorische Anforderungen: Die Einhaltung von Datenschutz- und Compliance-Vorschriften kann eine Herausforderung darstellen, insbesondere wenn Daten in der Cloud gespeichert und verarbeitet werden. Viele Regulierungsbehörden haben spezifische Anforderungen an die Verschlüsselung von sensiblen Daten, die berücksichtigt werden müssen.

Vertrauen in den Cloud-Anbieter: Obwohl Cloud-Anbieter oft Verschlüsselung als Service anbieten, müssen Kunden darauf vertrauen, dass der Anbieter angemessene Sicherheitsmaßnahmen implementiert hat und die Daten angemessen schützt. Dies erfordert eine sorgfältige Überprüfung der Sicherheitsrichtlinien, Verträge und Compliance-Zertifizierungen des Anbieters. Auch sind Cloudanbieter wie bspw. Microsoft, AWS etc. permanent Angriffen ausgesetzt, welche immer das Ziel verfolgen an die dort gespeicherten Daten zu gelangen. Dies ist in der Vergangenheit mehrfach passiert und wird es auch in Zukunft.

Es ist daher eine Aufgabe ein Verfahren zum sicheren Entfernen von Blöcken aus einer bestehenden Blockchain in einer abgeschlossenen Infrastruktur vorzuschlagen, welche die beschriebenen Nachteile behebt. Ferner ist es eine Aufgabe der vorliegenden Erfindung eine entsprechend eingerichtete Systemanordnung vorzuschlagen. Ferner ist es eine Aufgabe ein Computerprogrammprodukt mit Steuerbefehlen bereitzustellen, welche das Verfahren implementieren beziehungsweise die vorgeschlagene Vorrichtung und Anordnung betreiben.

Ferner ist es eine Aufgabe der vorliegenden Erfindung eine entsprechend eingerichtete Vorrichtung bereitzustellen. Ferner soll ein Computerprogrammprodukt bereitgestellt werden, welches Steuerbefehle vorhält, welche das Verfahren implementieren beziehungsweise die vorgeschlagene Vorrichtung betreiben.

Die Aufgabe wird gelöst durch ein Verfahren mit den Merkmalen gemäß Patentanspruch 1. Weitere vorteilhafte Ausgestaltungen sind in den Unteransprüchen angegeben.

Demgemäß wird ein Verfahren zum sicheren Entfernen von Blöcken aus einer bestehenden Blockchain in einer abgeschlossenen Infrastruktur vorgeschlagen, aufweisend ein Bereitstellen einer herkömmlichen Blockchain aufweisend Blöcke und Referenzen, welche eine verkettete Liste bilden und jeder Block mindestens einen Parameter aufweist; ein Betreiben der herkömmlichen Blockchain in einer in sich geschlossenen netzwerktechnisch eingerichteten Infrastruktur aufweisend Netzwerkknoten, wobei die herkömmliche Blockchain redundant auf mindestens eine Teilmenge der Netzwerkknoten verteilt wird; ein Erstellen einer Löschanfrage mindestens eines Blocks der herkömmlichen Blockchain durch einen Netzwerkknoten, welche an weitere Netzwerkknoten übermittelt wird; bei einem positiven Bescheiden der Löschanfrage durch die Netzwerkknoten gemäß einer Bescheidungsmetrik ein Erstellen einer gesonderten Blockchain, aufweisend mindestens einen Block mit einem Löscheintrag, wobei jeweils jeder Block der gesonderten Blockchain eine Referenz auf jeweils einen zu löschenden Block der herkömmlichen Blockchain aufweist und ein Ausführen der Löschanfrage gemäß der gesonderten Blockchain durch die entsprechenden Netzwerkknoten.

Das vorgeschlagene Verfahren beschreibt eine erfinderische Methode, um Datenblöcke sicher aus einer bestehenden Blockchain in einer abgeschlossenen, netzwerktechnisch eingerichteten Infrastruktur zu entfernen. Dies stellt eine innovative Lösung für ein zentrales Problem im Bereich der Blockchain-Technologie dar, das sich aus dem Grundprinzip der Unveränderlichkeit ergibt. Normalerweise sind Daten in einer Blockchain so konzipiert, dass sie einmal eingetragen, unveränderlich bleiben, was die Integrität und Sicherheit der Blockchain gewährleistet. Dieses Verfahren bietet jedoch eine Möglichkeit, selektiv und kontrolliert Blöcke aus der Blockchain zu entfernen, ohne dabei die fundamentale Struktur oder das Vertrauen in die Blockchain zu beeinträchtigen. Im Folgenden wird jedes einzelne Merkmal dieses Verfahrens eingehend beschrieben und die damit verbundenen technischen Vorteile sowie mögliche Implementierungen erläutert.

Zunächst sieht das Verfahren die Bereitstellung einer herkömmlichen Blockchain vor. Eine Blockchain besteht aus einer verketteten Liste von Blöcken, die durch kryptografische Referenzen miteinander verbunden sind. Diese verkettete Struktur bedeutet, dass jeder Block einen Hashwert des vorherigen Blocks enthält, was die Sicherheit und Integrität der Blockchain sicherstellt, da jede Änderung an einem Block auch die nachfolgenden Blöcke betreffen würde. Jeder Block in dieser Kette enthält mindestens einen Parameter, der als Daten oder Informationseinheit fungiert. Diese Parameter können je nach Anwendungsfall variieren, z. B. Transaktionsdaten in Kryptowährungen oder andere wertvolle Informationen in verschiedenen Blockchain-Anwendungen oder im Dokumentenmanagement bzw. allgemein Dateiverwaltung. Die Verwendung dieser Struktur garantiert, dass die Daten in den Blöcken konsistent und sicher gespeichert werden.

Das Verfahren wird innerhalb einer geschlossenen, netzwerktechnisch eingerichteten Infrastruktur betrieben. Diese Infrastruktur besteht aus mehreren Netzwerkknoten, die gemeinsam die Blockchain verwalten und betreiben. Der Begriff "geschlossen" deutet darauf hin, dass das System isoliert und von der netzwerktechnisch abgeschottet ist, was eine entscheidende Sicherheitsmaßnahme darstellt. Da keine externen Verbindungen bestehen, wird das Risiko von Cyberangriffen oder unerwünschten Zugriffen von außen minimiert. Innerhalb dieser Infrastruktur wird die herkömmliche Blockchain auf eine Teilmenge der Netzwerkknoten redundant verteilt. Diese Redundanz bedeutet, dass mehrere Knoten Kopien der Blockchain speichern, was die Ausfallsicherheit des Systems erheblich erhöht. Selbst wenn einer oder mehrere Knoten ausfallen, bleibt die Blockchain weiterhin funktionsfähig und kann von anderen Knoten aus aufgerufen werden. Die Redundanz sorgt somit für hohe Verfügbarkeit und Stabilität des Systems, insbesondere in sicherheitskritischen Umgebungen, wo der permanente Zugriff auf die Blockchain entscheidend ist.

Das Merkmal der "abgeschlossenen, netzwerktechnisch eingerichteten Infrastruktur" bezieht sich in diesem Kontext beispielsweise auf ein Firmennetzwerk, das vollständig isoliert und in sich geschlossen ist. In einem solchen Netzwerk haben die Administratoren die volle Kontrolle über die Verwaltung, Konfiguration und Sicherheit der gesamten Infrastruktur. Dies bedeutet, dass sie alle notwendigen Rechte besitzen, um jede Netzwerkkomponente zu überwachen, zu steuern und zu modifizieren. Dies ermöglicht es die Blockchain nach eigenem Ermessen zu modifizieren. Abgeschlossen bedeutet im vorliegenden Kontext nicht, dass kein Netzwerkpfad zu einem anderen Netzwerk besteht. Typischerweise sind Firmennetzwerke an das Internet angeschlossen, wobei diese aber hiervon hardware- und softwaretechnisch abgegrenzt sind. Typischerweise liegt ein Eingangsserver bzw. ein Proxy vor, der durch Abgrenzung des Firmennetzwerkes vom Internet eine geschlossene Infrastruktur schafft.

Im Detail ist ein Firmennetzwerk dieser Art in der Regel von externen Netzwerken, insbesondere dem Internet, vollständig abgetrennt, um die Datensicherheit zu maximieren. Administratoren bestimmen den Zugriff auf das Netzwerk und setzen Sicherheitsrichtlinien durch, um sicherzustellen, dass nur autorisierte Benutzer und Geräte auf das Netzwerk zugreifen können. Dies verhindert nicht nur unerwünschte externe Zugriffe, sondern ermöglicht auch eine umfassende Überwachung und Kontrolle über alle internen Prozesse.

Innerhalb dieser geschlossenen Umgebung sorgen Administratoren dafür, dass alle Daten, einschließlich der in der Blockchain gespeicherten Blöcke, vor externen Bedrohungen geschützt sind. Sie sind in der Lage, Netzwerkressourcen wie Server, Firewalls, Switches und Router zu konfigurieren und abzusichern. Durch diese vollständige administrative Kontrolle kann das Netzwerk den betrieblichen Anforderungen des Unternehmens angepasst werden, und gleichzeitig wird ein Höchstmaß an Datensicherheit gewährleistet.

Die Administratoren haben zudem die volle Entscheidungsgewalt über die Verteilung und Verwaltung der Blockchain, die in diesem Netzwerk betrieben wird. Sie können festlegen, welche Netzwerkknoten Zugriff auf die Blockchain haben und wie diese verteilt wird. Die Redundanz der Blockchain, das heißt, dass Kopien der Blockchain auf verschiedenen Knoten im Netzwerk gespeichert werden, wird ebenfalls von den Administratoren verwaltet. Dies stellt sicher, dass auch im Falle eines Ausfalls einzelner Knoten die Blockchain weiterhin zugänglich und funktionsfähig bleibt. Die Verteilung der Blockchain erfolgt typischerweise durch die zugrunde liegende Infrastruktur ohne menschliches Zutun.

Zusätzlich können die Administratoren Sicherheitsprotokolle implementieren, die genau überwachen, wer Zugriff auf welche Daten hat und welche Änderungen durchgeführt werden. Im Falle von Löschanfragen oder anderen sicherheitskritischen Aktionen, wie sie im vorgeschlagenen Verfahren beschrieben werden, liegt es an den Administratoren, diese Prozesse zu überwachen und sicherzustellen, dass sie den vordefinierten Richtlinien und Sicherheitsanforderungen des Unternehmens entsprechen. Die vollständige Kontrolle der Administratoren über das Netzwerk garantiert also, dass das Verfahren zur sicheren Entfernung von Blöcken in einer hochsicheren, überwachten Umgebung abläuft, in der alle Aktivitäten dokumentiert und rückverfolgbar sind. Zudem lässt sich aufgrund der Administratorrechte die Blockchain editieren, was so im Stand der Technik nicht vorgesehen ist.

Ein weiteres Merkmal des Verfahrens ist die Möglichkeit, Blöcke aus der Blockchain zu löschen, was normalerweise bei herkömmlichen Blockchains nicht vorgesehen ist. Dieser Vorgang wird durch eine Löschanfrage initiiert, die von einem der Netzwerkknoten erstellt wird. Eine Löschanfrage kann als formelle Anforderung verstanden werden, bestimmte Blöcke aus der Blockchain zu entfernen. Diese Anfrage spezifiziert den oder die Blöcke, die gelöscht werden sollen, und wird anschließend an die anderen Netzwerkknoten innerhalb des Netzwerks übermittelt. Dies ist ein Element des dezentralen Charakters des Systems, da die Entscheidung über die Löschung nicht von einem einzelnen Knoten getroffen wird, sondern von der gesamten Netzwerkarchitektur getragen wird. Durch die Verteilung der Löschanfrage auf mehrere Knoten wird sichergestellt, dass keine zentrale Instanz die vollständige Kontrolle über den Löschprozess hat. Dies erhöht die Transparenz und das Vertrauen in den Prozess.

Um zu entscheiden, ob die Löschanfrage genehmigt werden soll, wird eine sogenannte Bescheidungsmetrik angewandt. Diese Metrik legt fest, welche Kriterien und Regeln erfüllt sein müssen, damit eine Löschanfrage von den Netzwerkknoten genehmigt wird. Beispielsweise könnte die Metrik vorsehen, dass eine bestimmte Anzahl von Knoten der Löschung zustimmen muss, bevor diese durchgeführt werden kann. Die genaue Natur der Bescheidungsmetrik kann je nach Anwendungsfall variieren, sie könnte auf Mehrheitsentscheidungen, bestimmten sicherheitstechnischen Überprüfungen oder anderweitigen Bedingungen basieren. Diese Metrik ist ein zentraler Mechanismus, um sicherzustellen, dass der Löschvorgang nicht willkürlich oder unkontrolliert erfolgt, sondern nach klar definierten Regeln und in Übereinstimmung mit den Vorgaben des Systems. Ein Vorteil der Bescheidungsmetrik ist, dass sie Transparenz und Nachvollziehbarkeit in den Entscheidungsprozess bringt und so die Integrität des Netzwerks gewahrt bleibt.

Nachdem die Löschanfrage positiv beschieden wurde, das heißt, nachdem die Netzwerkknoten der Löschung gemäß der Bescheidungsmetrik zugestimmt haben, erfolgt ein weiterer Schritt der Erstellung einer gesonderten Blockchain. Diese neue Blockchain dient dem Zweck, die Löschvorgänge zu dokumentieren und zu verfolgen. Jeder Block in dieser gesonderten Blockchain enthält mindestens einen sogenannten Löscheintrag. Dieser Eintrag verweist auf einen Block der ursprünglichen, herkömmlichen Blockchain, der gelöscht werden soll. Diese Verknüpfung zwischen der gesonderten Blockchain und der herkömmlichen Blockchain ist von Bedeutung, da sie eine lückenlose und transparente Dokumentation des Löschvorgangs ermöglicht. Die gesonderte Blockchain fungiert somit als eine Art "Logbuch" oder Protokoll, das sämtliche Löschvorgänge dokumentiert. Durch diese klare Trennung zwischen der herkömmlichen Blockchain und der gesonderten Blockchain wird sichergestellt, dass die Integrität und Unveränderlichkeit der ursprünglichen Blockchain gewahrt bleiben, während dennoch spezifische Blöcke sicher und transparent gelöscht werden können.

Das Ausführen der eigentlichen Löschung der Blöcke erfolgt anschließend durch die Netzwerkknoten, die die herkömmliche Blockchain betreiben. Diese Knoten führen die Löschanfrage auf Grundlage der gesonderten Blockchain aus, indem sie die entsprechenden Blöcke aus der herkömmlichen Blockchain entfernen. Dieser Prozess stellt sicher, dass die Löschung dezentral und synchron über alle betroffenen Knoten hinweg erfolgt. Die Netzwerkknoten arbeiten dabei koordiniert zusammen, um sicherzustellen, dass die Blockchain über alle Knoten hinweg konsistent bleibt, auch wenn Blöcke entfernt werden. Dieser Schritt ist entscheidend, um sicherzustellen, dass die Redundanz und Verfügbarkeit des Systems auch nach der Löschung von Blöcken gewahrt bleibt.

Der technische Vorteil dieses Verfahrens liegt in der Möglichkeit, Daten in einer Blockchain sicher und nachvollziehbar zu löschen, ohne dabei die grundlegenden Prinzipien der Blockchain, insbesondere die Unveränderlichkeit und die Integrität der Daten, zu verletzen. Die Erstellung einer separaten Blockchain für die Dokumentation der Löschvorgänge stellt sicher, dass alle Löschungen genau nachvollziehbar und überprüfbar sind, was in vielen Umgebungen von Bedeutung ist. Darüber hinaus sorgt das Konsensverfahren zwischen den Netzwerkknoten für zusätzliche Sicherheit, da es verhindert, dass Löschungen unautorisiert oder unkontrolliert durchgeführt werden können.

Insgesamt bietet dieses Verfahren eine technisch ausgereifte Lösung für die problematische Frage der Datenlöschung in unveränderlichen Blockchain-Systemen. Es ermöglicht die flexible Verwaltung von Daten und Löschvorgängen, ohne die grundlegende Sicherheit und Konsistenz der Blockchain zu gefährden. Insbesondere in Anwendungen, bei denen sensible Daten gespeichert werden stellt dieses Verfahren einen bedeutenden Vorteil dar, da es ermöglicht, spezifische Informationen sicher zu löschen, während gleichzeitig die Transparenz und Nachvollziehbarkeit des Prozesses gewährleistet bleibt.

Die erfindungsgemäße Lösung umfasst die zur Sicherung von Cloud-Systemen durch die Implementierung einer Blockchain-Infrastruktur, die eine transparente, sichere und dezentrale Verwaltung von Verschlüsselungsschlüsseln ermöglicht. Diese Lösung nutzt die inhärente Sicherheit und Unveränderlichkeit der Blockchain-Technologie, um das Schlüsselmanagement deutlich zu verbessern, die Datenintegrität zu gewährleisten und das Vertrauen zwischen den sich austauschenden Teilnehmern innerhalb der Plattform zu gewährleisten.

Durch die Kombination von kryptographischen Verfahren und Smart Contracts ermöglicht unsere Lösung einen sicheren Austausch von Verschlüsselungsschlüsseln, eine sichere Speicherung und Übertragung von Daten sowie eine transparente Überprüfung von Zugriffsrechten und Aktivitäten in der Cloud. Darüber hinaus ermöglicht die Blockchain-Infrastruktur eine nahtlose Integration mit bestehenden Cloud-Plattformen und bietet eine skalierbare Lösung für Unternehmen verschiedener Größen und Branchen.

Ziel der Entwicklung war es, eine nahtlose Integration in bestehende Infrastrukturen zu gewährleisten, ohne dem Benutzer eine völlig neue Umgebung aufzuzwingen. Deshalb handelt es sich hier um ein Add-On, welches vorhandene, auch gewachsene IT-Strukturen, ergänzt, ohne auf Bekanntes verzichten zu müssen. Somit gewährleisten wir Interoperabilität, Konsistenz und die bestehende Nutzererfahrung. Darüber hinaus wird das Management und die Wartung zentralisiert.

Auch künftige Bedrohungen durch Kl wird entgegengewirkt, da Softwareseitig abnormales Verhalten auf Node Ebene, Mustererkennung und die Überwachung der Smart Contracts implementiert ist.

Aufgrund der technischen Möglichkeiten ist eine native Integration im Azure Marketplace und alle damit einhergehenden Automatisierungen möglich.

Für den Benutzer bedeutet unsere nahtlose Softwarelösung bspw. niedrigere Gesamtbetriebskosten, da weniger Ressourcen für Implementierung, Integration, Schulung und Support, oder gar den Umstieg auf eine völlig neue Umgebung erfordert.

Erstmals ist es möglich bestehende Infrastrukturen in der Cloud nicht nur mit einer Blockchain Anwendung/Anwendungsfälle zu verknüpfen (bspw. DMS oder Supply Chain, Messenger etc.), sondern diese direkt nativ in bestehende Umgebungen zu integrieren und als zusätzliche Schicht im Hintergrund für die Datensicherheit zu sorgen. Hierbei ist es unerheblich, wie und für was das zu Grunde liegende System genutzt wird, oder ob es bereits weitere Verschlüsselungskomponenten gibt.

Es bedarf keinerlei weiteren externen Dienstleister mit eigener Cloud Infrastruktur oder Ähnliches, um diese Funktionen zur Verfügung zu stellen. Unsere Lösung kann sowohl Off-Prem als auch On-Prem genutzt werden. Auf Benutzerseite wird ein Client benötigt, der die private Chain beinhaltet, welche mit der Main Chain (Cloud/Server) kommuniziert.

Der Client integriert sich als Dienst in das Windows System des Anwenders und überwacht bspw. den (Business) OneDrive Ordner. Hier wird über ein virtuelles Dateisystem dafür gesorgt, dass keinerlei Dateifragmente direkt in Windows übrigbleiben und somit kein Datendiebstahl möglich ist. Das virtuelle Dateisystem nutzt Sandboxing und Isolationsmechanismen, um die Ausführung von potenziell schädlichem Code zu verhindern. Dies trägt dazu bei, die Sicherheit des Systems vor Malware und anderen Bedrohungen zu gewährleisten.

Die Dateien werden rollierend mit einem neuen Schlüssel versehen, sobald die Bearbeitung abgeschlossen ist. Somit haben Windows Prozesse keinen Zugriff auf die verschlüsselten Dateien innerhalb des virtuellen Dateisystems und können auch nicht durch Dritte abgefangen oder gelesen werden. Auch ist es möglich bestehende Schlüssel zu zerstören und somit den Zugriff auf Daten komplett zu verhindern. Seitens Azure (Cloud) werden zusätzlich Snapshots der veränderten Daten innerhalb der Blockchain angelegt und damit eine Versionierung ermöglicht. Damit ist es möglich nicht nur eine Veränderung der Daten festzustellen, sondern auch zu sehen was verändert wurde.

Diese genannten Möglichkeiten und darüber hinaus die native Einbindung als Microsoft App im Microsoft Marketplace bietet derzeit kein anderes Produkt am Markt.

Technische Vorteile dieser Architektur liegen vor allem in der Unveränderlichkeit und der Sicherheit der Daten. Durch die kryptografische Verkettung wird jede Manipulation sofort offensichtlich, was eine hohe Integrität der gespeicherten Informationen gewährleistet. Darüber hinaus ermöglicht die Dezentralisierung, dass die Blockchain auf vielen Knotenpunkten gleichzeitig gespeichert und aktualisiert wird, wodurch sie besonders ausfallsicher ist und kein zentraler Kontrollpunkt existiert, der anfällig für Angriffe wäre. Transparenz und Nachvollziehbarkeit sind weitere wesentliche Vorteile, da jede Transaktion und jeder Block öffentlich überprüfbar sind, was besonders in Bereichen wie Finanztransaktionen oder Lieferketten von großem Nutzen ist. Durch Konsensmechanismen wie Proof of Work oder Proof of Stake wird sichergestellt, dass nur gültige Blöcke zur Blockchain hinzugefügt werden, was zusätzliche Sicherheit und Vertrauen in das System schafft.

Der Begriff Blockchain wird hierin synonym zum Begriff verkettete Liste verwendet. Der Begriff kann auch als Blockkette übersetzt werden. Nach einem Löschen von Datenblöcken bzw. Blöcken oder Einträgen der Blockchain kann ein Propagieren der Änderungen im Netzwerk erfolgen, derart, dass die angepasste Blockchain wieder redundant in der gewünschten Version auf den Netzwerkknoten konsistent zur Verfügung steht.

Gemäß einem Aspekt der vorliegenden Erfindung werden nach dem Ausführen der Löschanfrage Blöcke, die den zu löschenden Blöcken nachfolgen, angepasst. Dies hat den Vorteil, dass die Struktur und Verkettung der Blockchain erhalten bleibt, auch wenn einzelne Blöcke gelöscht werden. In einer Blockchain ist jeder Block über kryptografische Hashes mit seinem Vorgänger und Nachfolger verbunden. Das Löschen eines Blocks könnte theoretisch dazu führen, dass die Kette unterbrochen wird und die Integrität der gesamten Blockchain gefährdet wird. Durch die Anpassung der nachfolgenden Blöcke wird diese Unterbrechung verhindert, da alle Verweise, die auf den gelöschten Block zeigen, entsprechend geändert werden. Dadurch bleibt die Kette konsistent und die nachfolgenden Blöcke können weiterhin korrekt referenziert werden. Dies sichert die Funktionalität der Blockchain, indem alle kryptografischen Verbindungen und Abhängigkeiten nach der Löschung eines Blocks weiterhin korrekt sind.

Gemäß einem weiteren Aspekt der vorliegenden Erfindung werden nach dem Ausführen der Löschanfrage Blöcke, die den zu löschenden Blöcken nachfolgen, hinsichtlich ihrer abgespeicherten Referenzen, Prüfsummen, Hashwerte, Konsistenzinformationen und/oder Integritätsinformationen angepasst. Dies hat den Vorteil, dass die Sicherheit der Blockchain auf kryptografischer Ebene vollständig erhalten bleibt. Prüfsummen, Hashwerte und andere Konsistenzinformationen sind essenziell, um die Unveränderlichkeit der Blockchain zu gewährleisten. Wenn ein Block gelöscht wird, könnten diese Informationen in den nachfolgenden Blöcken ungültig werden, da sie sich auf den vorherigen Block beziehen. Durch die Anpassung dieser kryptografischen Parameter bleibt die Konsistenz der Blockchain erhalten, und jede Manipulation wird sofort erkannt. Dies verhindert, dass der Löschvorgang zu Sicherheitslücken führt, und stellt sicher, dass die gesamte Blockchain weiterhin zuverlässig und unverändert bleibt. Dies ist besonders in sicherheitskritischen Bereichen wie Finanztransaktionen oder sensiblen Datenspeicherungssystemen von großer Bedeutung.

Gemäß einem weiteren Aspekt der vorliegenden Erfindung werden zu löschende Blöcke in einer anderen Blockchain als der herkömmlichen Blockchain und/oder einem Archiv abgespeichert. Dies hat den Vorteil, dass gelöschte Daten nicht unwiderruflich verloren gehen, sondern in einer anderen Blockchain oder einem Archiv sicher gespeichert werden können. Dies ermöglicht es, gelöschte Blöcke zu einem späteren Zeitpunkt wiederherzustellen oder zu überprüfen, falls dies erforderlich ist. Vor allem in regulatorischen oder rechtlichen Kontexten ist dies von Vorteil, da es Unternehmen ermöglicht, Daten aus der aktiven Blockchain zu entfernen, diese jedoch gleichzeitig sicher aufzubewahren, um sie im Falle von Audits oder Rechtsstreitigkeiten verfügbar zu halten. So wird eine Balance zwischen der Löschung von Daten in der Blockchain und der Nachvollziehbarkeit historischer Transaktionen geschaffen.

Gemäß einem weiteren Aspekt der vorliegenden Erfindung entspricht die Bescheidungsmetrik einer Mehrheitsabstimmung oder einer festgelegten Zustimmungsquote. Dies hat den Vorteil, dass Entscheidungen über die Löschung von Blöcken nicht zentral, sondern demokratisch durch das Netzwerk getroffen werden. Eine Mehrheitsabstimmung oder eine festgelegte Zustimmungsquote verhindert, dass einzelne Netzwerkknoten die alleinige Kontrolle über Löschungen haben. Dieser Konsensmechanismus erhöht das Vertrauen in das Blockchain-System, da mehrere Knoten am Entscheidungsprozess beteiligt sind und unautorisierte Löschungen verhindert werden. Der Vorteil dieser Metrik besteht darin, dass das gesamte Netzwerk eine Rolle bei der Sicherstellung der Datenintegrität spielt, was besonders in dezentralen und verteilten Systemen wie der Blockchain von großer Bedeutung ist.

Gemäß einem weiteren Aspekt der vorliegenden Erfindung wird die Bescheidungsmetrik in Abhängigkeit einer Validitätsprüfung, Authentizitätsprüfung und/oder bestehender Blöcke evaluiert. Dies hat den Vorteil, dass die Entscheidung über Löschanfragen nicht nur auf einer Mehrheitsabstimmung basiert, sondern auch technische Prüfungen zur Validierung und Authentifizierung der Anfragen durchlaufen muss. Eine Validitätsprüfung stellt sicher, dass die Anfrage legitim ist und den technischen Anforderungen entspricht, während eine Authentizitätsprüfung die Quelle der Anfrage überprüft. Dies minimiert das Risiko, dass unberechtigte Löschanfragen genehmigt werden. Durch die zusätzliche Prüfung von bestehenden Blöcken wird gewährleistet, dass der Löschvorgang keine unbeabsichtigten Folgen für die übrige Blockchain hat. Diese mehrstufigen Prüfungen stärken die Sicherheit und Integrität des gesamten Löschprozesses.

Gemäß einem weiteren Aspekt der vorliegenden Erfindung erfolgt das Ausführen der Löschanfrage derart, dass der mindestens eine Block jeweils gelöscht wird, die Referenz auf den Block aufgehoben wird, der Block überschrieben wird, eine Entschlüsselungsinformation verworfen wird, der mindestens eine Parameter des Blocks gelöscht wird, ein Hashwert verändert und/oder der Block verschlüsselt wird. Dies hat den Vorteil, dass verschiedene Optionen für die Durchführung der Löschung zur Verfügung stehen, die je nach den spezifischen Sicherheits- und Datenschutzanforderungen angepasst werden können. Die Möglichkeit, einen Block zu überschreiben oder seine Entschlüsselungsinformation zu verwerfen, stellt sicher, dass die Daten unwiederbringlich entfernt werden können, ohne dass ein Rückgriff auf die gelöschten Informationen möglich ist. Durch das Verändern des Hashwerts oder das Aufheben der Referenzen wird zudem sichergestellt, dass der Block nicht mehr in der Blockchain verankert ist. Diese Flexibilität ermöglicht es, Löschungen so durchzuführen, dass sie den spezifischen Anforderungen an Datenschutz und Datensicherheit entsprechen.

Gemäß einem weiteren Aspekt der vorliegenden Erfindung weist die Löschanfrage mindestens einen Löschgrund auf und/oder es wird in Abhängigkeit dieses Löschgrunds ein Wiederherstellungsversuch unternommen. Dies hat den Vorteil, dass der Löschprozess besser dokumentiert und nachvollziehbarer gestaltet wird. Indem jeder Löschanfrage ein spezifischer Grund zugeordnet wird, können die Administratoren oder Knotenbetreiber den Löschvorgang besser verstehen und überwachen. Sollte es zu einer versehentlichen oder unrechtmäßigen Löschung kommen, bietet der dokumentierte Löschgrund die Grundlage, um die Daten im Bedarfsfall wiederherzustellen. Diese Funktion schafft zusätzliche Sicherheit und Flexibilität im Umgang mit sensiblen Daten, da sie eine Wiederherstellung im Falle eines Fehlers ermöglicht.

Gemäß einem weiteren Aspekt der vorliegenden Erfindung wird die herkömmliche Blockchain mittels einer Schnittstelle in die geschlossene Infrastruktur importiert. Dies hat den Vorteil, dass bestehende Blockchain-Daten sicher in eine abgeschlossene Infrastruktur, wie ein Firmennetzwerk, importiert werden können. Diese Schnittstelle stellt sicher, dass alle Daten sicher und effizient übertragen werden, ohne die Integrität der Blockchain zu beeinträchtigen. Die geschlossene Infrastruktur bietet zudem Schutz vor externen Bedrohungen, indem sie die Blockchain-Daten in einem kontrollierten und isolierten Netzwerkumfeld verarbeitet. Dies ist besonders nützlich, wenn Blockchains aus offenen Netzwerken in sicherheitskritische Umgebungen importiert werden müssen, etwa in Unternehmen oder Behörden mit hohen Sicherheitsanforderungen.

Gemäß einem weiteren Aspekt der vorliegenden Erfindung verweisen die Blöcke der herkömmlichen Blockchain jeweils auf ein Dokument, welches bei einer entsprechenden Löschanfrage für die Bearbeitung gesperrt wird. Dies hat den Vorteil, dass während des Löschprozesses keine parallelen Änderungen an den verknüpften Dokumenten vorgenommen werden können. Dies verhindert Inkonsistenzen zwischen den Blockchain-Einträgen und den referenzierten Dokumenten, da diese während der Bearbeitung gesperrt bleiben. Die Sperrung der Dokumente stellt sicher, dass die Daten kohärent und konsistent bleiben, während der Löschvorgang ausgeführt wird. Dies trägt zur Datensicherheit bei und gewährleistet, dass keine Konflikte zwischen den Blockchain-Transaktionen und den verknüpften Dokumenten entstehen.

Gemäß einem weiteren Aspekt der vorliegenden Erfindung ist die geschlossene netzwerktechnisch eingerichtete Infrastruktur technisch von einem weiteren angeschlossenen Netzwerk getrennt. Dies hat den Vorteil, dass die Blockchain in einem vollständig isolierten Netzwerk betrieben wird, das vor externen Einflüssen und Bedrohungen geschützt ist. Diese Isolation stellt sicher, dass keine externen Netzwerke Zugriff auf die Blockchain-Daten haben und das Firmennetzwerk vor Cyberangriffen oder unautorisiertem Zugriff geschützt bleibt. Dadurch wird die Sicherheit der Blockchain-Daten erheblich gesteigert, insbesondere in Umgebungen, in denen hohe Sicherheitsanforderungen bestehen, wie z.B. in Finanzinstitutionen oder Regierungsbehörden.

Gemäß einem weiteren Aspekt der vorliegenden Erfindung liegen die Netzwerkknoten in der Infrastruktur verteilt als Hardware- und/oder Softwarekomponenten vor. Dies hat den Vorteil, dass das Blockchain-Netzwerk flexibel gestaltet und an die Bedürfnisse des Unternehmens angepasst werden kann. Hardwarebasierte Knoten bieten physische Sicherheit und ermöglichen eine bessere Kontrolle über die Infrastruktur, während softwarebasierte Knoten eine schnellere Skalierung und leichtere Verwaltung bieten. Durch die Kombination von Hardware- und Softwarekomponenten wird die Ausfallsicherheit und Redundanz des Netzwerks erhöht, da bei einem Ausfall von Hardwareknoten Softwareknoten einspringen können und umgekehrt. Diese Verteilung erhöht die Verfügbarkeit und Zuverlässigkeit des Systems und ermöglicht eine Anpassung an verschiedene betriebliche Anforderungen.

Die Aufgabe wird auch gelöst durch eine Systemanordnung zum sicheren Entfernen von Blöcken aus einer bestehenden Blockchain in einer abgeschlossenen Infrastruktur, aufweisend eine Schnittstelleneinheit eingerichtet zum Bereitstellen einer herkömmlichen Blockchain aufweisend Blöcke und Referenzen, welche eine verkettete Liste bilden und jeder Block mindestens einen Parameter aufweist; eine Infrastruktur eingerichtet zum Betreiben der herkömmlichen Blockchain in der in sich geschlossenen netzwerktechnisch eingerichteten Infrastruktur aufweisend Netzwerkknoten, wobei die herkömmliche Blockchain redundant auf mindestens eine Teilmenge der Netzwerkknoten verteilt wird; eine Anfrageeinheit eingerichtet zum Erstellen einer Löschanfrage mindestens eines Blocks der herkömmlichen Blockchain durch einen Netzwerkknoten, welche an weitere Netzwerkknoten übermittelt wird; eine Blockchaineinheit eingerichtet bei einem positiven Bescheiden der Löschanfrage durch die Netzwerkknoten gemäß einer Bescheidungsmetrik zum Erstellen einer gesonderten Blockchain, aufweisend mindestens einen Block mit einem Löscheintrag, wobei jeweils jeder Block der gesonderten Blockchain eine Referenz auf jeweils einen zu löschenden Block der herkömmlichen Blockchain aufweist; und eine Löscheinheit eingerichtet zum Ausführen der Löschanfrage gemäß der gesonderten Blockchain durch die entsprechenden Netzwerkknoten.

Die Aufgabe wird auch gelöst durch ein Computerprogrammprodukt mit Steuerbefehlen, welche das vorgeschlagene Verfahren implementieren beziehungsweise die vorgeschlagene Vorrichtung betreiben.

Erfindungsgemäß ist es besonders vorteilhaft, dass das Verfahren zum Betreiben der vorgeschlagenen Vorrichtungen und Einheiten verwendet werden kann. Ferner eignen sich die vorgeschlagenen Vorrichtungen und Einrichtungen zur Ausführung des erfindungsgemäßen Verfahrens. Somit implementiert jeweils die Vorrichtung strukturelle Merkmale, welche geeignet sind, das entsprechende Verfahren auszuführen. Die strukturellen Merkmale können jedoch auch als Verfahrensschritte ausgestaltet werden. Auch hält das vorgeschlagene Verfahren Schritte zu Umsetzung der Funktion der strukturellen Merkmale bereit. Darüber hinaus können physische Komponenten gleicherweise auch virtuell bzw. virtualisiert bereitgestellt werden.

Weitere Vorteile, Merkmale und Einzelheiten der Erfindung ergeben sich aus der nachfolgenden Beschreibung, in der unter Bezugnahme auf die Zeichnungen Aspekte der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Ebenso können die vorstehend genannten und die hier weiter ausgeführten Merkmale je für sich oder zu mehreren in beliebigen Kombinationen Verwendung finden. Funktionsähnliche oder identische Bauteile oder Komponenten sind teilweise mit gleichen Bezugszeichen versehen. Die in der Beschreibung der Ausführungsbeispiele verwendeten Begriffe "links", "rechts", "oben" und "unten" beziehen sich auf die Zeichnungen in einer Ausrichtung mit normal lesbarer Figurenbezeichnung bzw. normal lesbaren Bezugszeichen. Die gezeigten und beschriebenen Ausführungsformen sind nicht als abschließend zu verstehen, sondern haben beispielhaften Charakter zur Erläuterung der Erfindung. Die detaillierte Beschreibung dient der Information des Fachmanns, daher werden bei der Beschreibung bekannte Schaltungen, Strukturen und Verfahren nicht im Detail gezeigt oder erläutert, um das Verständnis der vorliegenden Beschreibung nicht zu erschweren. In den Figuren zeigen:
- Figur 1:: ein schematisches Ablaufdiagramm des vorgeschlagenen Verfahrens zum sicheren Entfernen von Blöcken aus einer bestehenden Blockchain gemäß einem Aspekt der vorliegenden Erfindung;
- Figur 2:: ein weiteres schematisches Ablaufdiagramm des vorgeschlagenen Verfahrens zum sicheren Entfernen von Blöcken aus einer bestehenden Blockchain gemäß einem weiteren Aspekt der vorliegenden Erfindung
- Figur 3:: eine beispielhafte verkettete Liste, in der ein Block gemäß der vorgeschlagenen Erfindung gelöscht werden soll;
- Figur 4:: eine beispielhafte verkettete Liste, in der ein Block gemäß der vorgeschlagenen Erfindung gelöscht und archiviert ist; und

- Figur 5:: eine beispielhafte verkettete Liste, in der Blöcke gemäß der vorgeschlagenen Erfindung gelöscht werden.

Die vorliegenden Figuren weisen teilweise Parameter auf, welche dem Fachmann in der englischen Bezeichnung so geläufig sind und welche als Parameter verwendet werden und so nicht zu übersetzen sind.

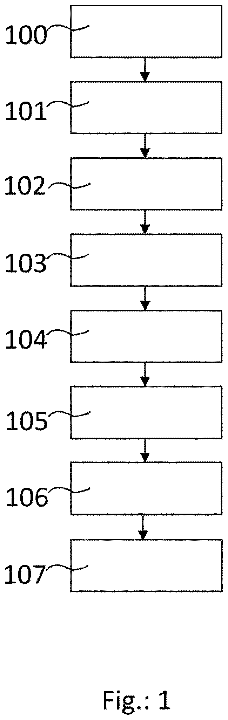

Figur 1 zeigt in einem schematischen Ablaufdiagramm ein Verfahren zum sicheren Entfernen von Blöcken aus einer bestehenden Blockchain in einer abgeschlossenen Infrastruktur, aufweisend ein Bereitstellen 100 einer herkömmlichen Blockchain aufweisend Blöcke und Referenzen, welche eine verkettete Liste bilden und jeder Block mindestens einen Parameter aufweist; ein Betreiben 101 der herkömmlichen Blockchain in einer in sich geschlossenen netzwerktechnisch eingerichteten Infrastruktur aufweisend Netzwerkknoten, wobei die herkömmliche Blockchain redundant auf mindestens eine Teilmenge der Netzwerkknoten verteilt 102 wird; ein Erstellen 103 einer Löschanfrage mindestens eines Blocks der herkömmlichen Blockchain durch einen Netzwerkknoten, welche an weitere Netzwerkknoten übermittelt 104 wird; bei einem positiven Bescheiden 105 der Löschanfrage durch die Netzwerkknoten gemäß einer Bescheidungsmetrik ein Erstellen 106 einer gesonderten Blockchain, aufweisend mindestens einen Block mit einem Löscheintrag, wobei jeweils jeder Block der gesonderten Blockchain eine Referenz auf jeweils einen zu löschenden Block der herkömmlichen Blockchain aufweist und ein Ausführen 107 der Löschanfrage gemäß der gesonderten Blockchain durch die entsprechenden Netzwerkknoten.

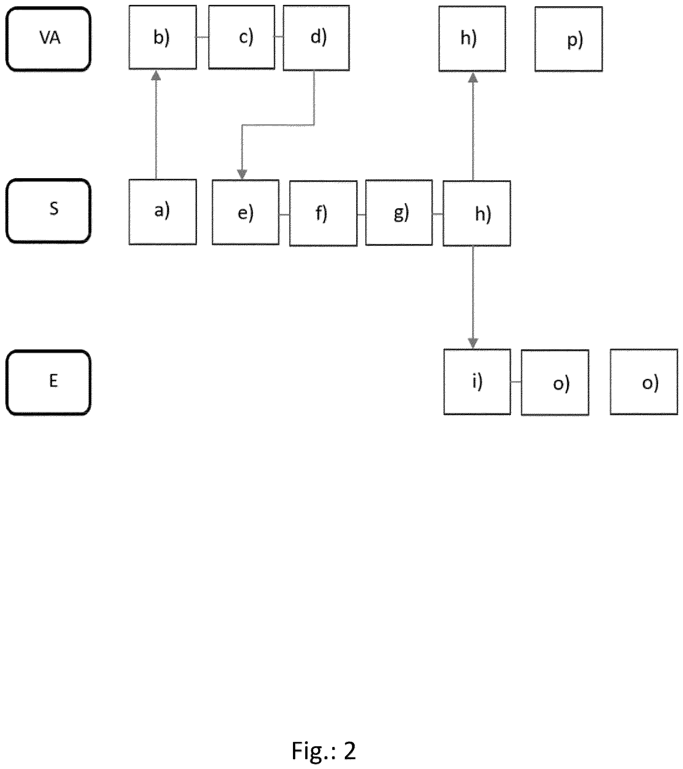

Figur 2 zeigt in einem schematischen Ablaufdiagramm ein Verfahren zum sicheren Entfernen von Blöcken. Das erfindungsgemäße Verfahren benutzt die Blockchain-Technologie, um Verschlüsselungsbasisdaten für jede Datenübertragung neu zu generieren und um über den Hashwert der Blockchain eine Integritätsüberprüfung jederzeit zu ermöglichen.

Zuerst erfragt der Sender in Schritt a) von der Verschlüsselungsautorität die Vergabe eines Tokens, welches als Basis für die Verschlüsselung der zu übertragenden Daten verwendet werden soll. In Schritt b) erstellt die Verschlüsselungsautorität das Token und schreibt dieses in einen von der Verschlüsselungsautorität erstellten neuen Block, welcher ihrer Main Chain, angehängt wird. Die Verschlüsselungsautorität gibt in Schritt c) das erstellte Token an den Sender zurück. Daraufhin erstellt der Sender in Schritt d) einen Schlüssel, welcher aus dem Token und dem letzten bestätigten Hash bzw. dem Genesishash abgeleitet ist und der Sender S verschlüsselt in Schritt e) eine Nachricht zur Übertragung an den Empfänger E unter Verwendung des erstellten Schlüssels. Anschließend sichert der Sender S in Schritt f) den Hash der unverschlüsselten Nachricht in einem neuen Block seiner privaten Blockchain und übermittelt in Schritt g) die verschlüsselte Nachricht an den Empfänger E. Der Sender erstellt in Schritt h) den Hash der verschlüsselten Nachricht und übermittelt ihn an die Verschlüsselungsautorität.

Anschließend übermittelt der Empfänger in Schritt i) den Hash der verschlüsselten Nachricht an die Verschlüsselungsautorität und fordert eine Integritätsbestätigung von der Verschlüsselungsautorität an. Die Verschlüsselungsautorität vergleicht daraufhin in Schritt n) die Hashs von Empfänger E und Sender S und übermittelt das Vergleichsergebnis und das Token an den Empfänger.

Im Fall der Bestätigung der Integrität durch die Verschlüsselungsautorität berechnet der Empfänger E in Schritt o) aus dem Token und dem zuletzt bestätigten Hash der unverschlüsselten Nachricht bzw. Genesishash den Schlüssel für das anschließende Entschlüsseln der Nachricht durch ein beliebiges Verschlüsselungsverfahren. Im Falle das die Integrität nicht bestätigt wird, erfolgt an dieser Stelle der Abbruch, weil die Daten zwischen Sender und Empfänger nicht konsistent sind. Der Empfänger entschlüsselt in Schritt p) die Nachricht anhand des Schlüssels und sichert in Schritt q) den Hash der unverschlüsselten Nachricht in einem Block seiner privaten Chain.

Schließlich übermittelt der Empfänger E in Schritt r) eine Empfangsbestätigung für den Hash der unverschlüsselten Nachricht an den Sender S und eine Empfangsbestätigung des Hashs der verschlüsselten Nachricht an die Verschlüsselungsautorität für weitere Datenübertragungen. Darüber hinaus werden insbesondere zwischen den Schritten i) und n) folgende weitere Schritte durchgeführt:
k) der Empfänger basiert die Integritätsanfrage an die Verschlüsselungsautorität auf Transaction Tree (Merkle) Technologie,
l) die Verschlüsselungsautorität überprüft den Transaction Tree mittels der Main Chain,
m) die Verschlüsselungsautorität übermittelt das Ergebnis der Integritätsprüfung an den Empfänger. Diese Transaction Tree-Verifizierung bietet eine erweiterte Überprüfung auf Integritätsverletzungen. So ist es möglich mittels des Merkle Tree Hashing Verfahren die gesamte Chain, das heißt Main Chain als auch Private Chains des Senders und Empfängers auf Verletzungen zu überprüfen. Hierbei wird nicht nur die aktuell empfange Nachricht mittels Hashwert auf Änderungen überprüft, sondern auch die gesamte Reihenfolge der Chain. Die Integritätsüberwachung wird somit verbessert und das Verfahren eine Vielzahl, schwer zu manipulierender Schutzfunktionen zur Einhaltung der Integrität eines Drittsystems.

### Funktionsverfahren des Clients

Zunächst identifiziert das System die Daten, die in der Blockchain gespeichert werden sollen. Diese Daten könnten beispielsweise Transaktionsdaten, Smart-Contract-Code, Dokumente oder andere relevante Informationen sein, die auf der Blockchain festgehalten werden sollen.

Die verschlüsselten Daten werden in einer Transaktion verpackt, die dann an das Blockchain-Netzwerk gesendet wird.

Smart Contracts in der Blockchain verarbeiten die Transaktion der verschlüsselten Daten die vom Client (Virtuelles Dateisystem) kommen. Die Smart Contracts können sicherstellen, dass die Daten gemäß den festgelegten Regeln und Bedingungen gespeichert und aktualisiert werden.

### Speicherung im virtuellen Dateisystem:

Das virtuelle Dateisystem (Client) empfängt die verschlüsselten Daten von der Blockchain und speichert diese.

Wenn der Benutzer auf die gespeicherten Daten zugreifen möchte, kann die Blockchain Anfragen an das virtuelle Dateisystem senden, um die verschlüsselten Daten abzurufen. Die Daten werden dann entschlüsselt und an den Benutzer zurückgegeben, der die erforderlichen Zugriffsrechte besitzt.

Während des gesamten Prozesses werden Sicherheitsmechanismen implementiert, um die Integrität und Vertraulichkeit der Daten zu gewährleisten. Dies erfolgt über Zugriffsrechte, MFA und die Verschlüsselung der Daten, um sicherzustellen, dass sie vor unbefugtem Zugriff geschützt sind.

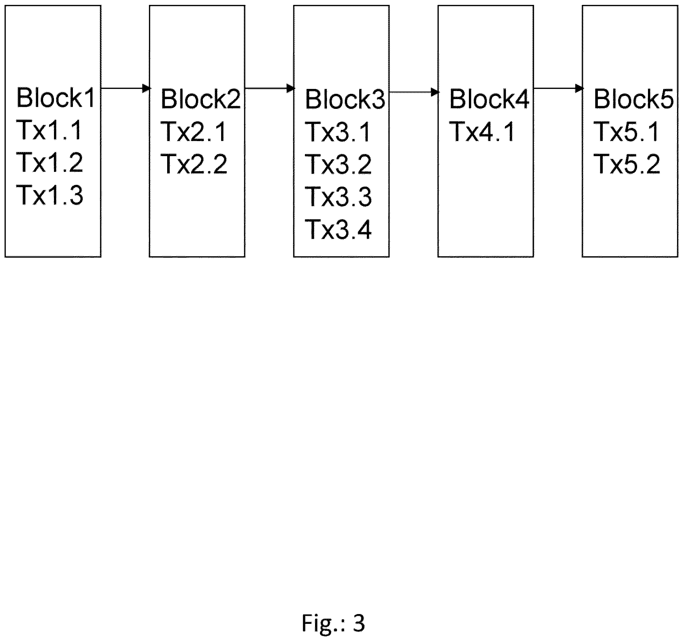

Figur 3 zeigt eine Blockchain mit mehreren Blöcken 1 bis 5. Die Blöcke weisen mehrere Parameter auf wie zum Beispiel Tx.1.1. Hier können auch Referenzen auf nachfolgende Blöcke gespeichert werden. Vorliegend soll der Eintrag bzw. Block 3 gelöscht werden.

Hierzu werden im Folgenden beispielhaft einige Aspekte der vorliegenden Erfindung erläutert.

### 1. Löschbare Blockstruktur

Die Basis der Erfindung ist die Erweiterung der herkömmlichen Blockchain-Struktur um eine zusätzliche Datenstruktur, die als "Löschflag" bezeichnet wird. Diese Löschflagge ist ein booleaner Wert (true/false), der festlegt, ob ein Block potenziell gelöscht werden kann oder nicht. Das Löschflag wird standardmäßig auf "false" gesetzt, kann aber im Zuge bestimmter Prozeduren auf "true" gesetzt werden, was den Block für den Löschvorgang markiert. Zusätzlich wird ein weiteres Feld namens "Löschgrund" eingeführt, welches textuelle Informationen speichert, die den Grund für die Löschung des Blocks angeben. Diese beiden Felder sind direkt in der Datenstruktur des Blocks integriert, sodass sie Teil der Kernfunktionalität des Systems sind und bei der Blockverarbeitung berücksichtigt werden.

Diese Struktur bietet die Flexibilität, Blöcke nachträglich für die Löschung vorzusehen, was eine entscheidende Weiterentwicklung der Blockchain darstellt. Das "Löschgrund"-Feld sorgt für Transparenz, indem es eine klare Begründung für die Löschung liefert, was den Entscheidungsprozess nachvollziehbar macht.

### 2. Löschprotokoll

Das Löschprotokoll beschreibt den Ablauf, wie ein Block in der Blockchain gelöscht wird. Dieser Prozess besteht aus drei Hauptschritten:
Antragstellung: Ein Netzwerkteilnehmer reicht einen Löschantrag für einen bestimmten Block ein. Dieser Antrag wird an alle Validatoren im Blockchain-Netzwerk gesendet und muss eine gültige Begründung im "Löschgrund"-Feld enthalten.

Prüfung: Nach Eingang des Antrags wird dieser von den Validatoren des Netzwerks überprüft. Validatoren sind spezielle Knotenpunkte, die für die Integrität der Blockchain verantwortlich sind. Sie prüfen den Löschantrag und stellen sicher, dass er den vorgegebenen Regeln entspricht, insbesondere in Bezug auf rechtliche Vorgaben wie Datenschutzanforderungen. Eine festgelegte Mehrheit der Validatoren (zum Beispiel zwei Drittel) muss dem Löschantrag zustimmen, bevor die Löschung genehmigt werden kann.

Löschung: Bei Zustimmung der Mehrheit der Validatoren wird das Löschflag des betroffenen Blocks auf "true" gesetzt. Der Block wird daraufhin aus der aktiven Blockchain entfernt, jedoch nicht vollständig gelöscht. Stattdessen werden die Transaktionen und Daten dieses Blocks in einem separaten "Archiv-Log" gespeichert, das außerhalb der aktiven Blockchain geführt wird. Die aktive Blockchain wird anschließend ohne diesen Block weitergeführt.

Dieses Protokoll gewährleistet einen strukturierten, sicheren und nachvollziehbaren Prozess zur Löschung von Blöcken. Durch die Mehrheitsprüfung der Validatoren wird sichergestellt, dass nur legitime Anträge genehmigt werden, wodurch die Unversehrtheit der Blockchain bewahrt bleibt. Zudem bietet das Archiv-Log eine Möglichkeit, Daten zu auditieren und für rechtliche Anforderungen vorzuhalten, ohne die aktive Blockchain zu belasten.

### 3. Archiv-Log

Das Archiv-Log ist eine separate, nicht aktive Datenstruktur, die speziell dafür entwickelt wurde, alle gelöschten Blöcke und ihre Transaktionen zu speichern. Diese Struktur steht außerhalb der normalen Blockchain und dient als ein Archiv für gelöschte Daten. Jeder gelöschte Block wird mit einem Zeitstempel und dem zugehörigen Löschgrund in diesem Archiv-Log gespeichert. Dadurch bleiben die gelöschten Blöcke jederzeit verfügbar für Audits, Compliance-Prüfungen oder regulatorische Anforderungen, obwohl sie nicht mehr Teil der aktiven Blockchain sind.

Das Archiv-Log ermöglicht es, die Historie der Blockchain vollständig transparent zu halten, auch wenn Daten gelöscht wurden. Dies ist besonders wichtig in Bereichen, in denen Datenlöschung gesetzlich vorgeschrieben ist, aber gleichzeitig die Nachvollziehbarkeit von Transaktionen gewährleistet werden muss. So kann ein Unternehmen sowohl den Datenschutz gewährleisten als auch die notwendige Prüfbarkeit sicherstellen.

### 4. Integritätssicherung

Nach der Löschung eines Blocks führt die Blockchain eine umfassende Integritätsprüfung durch. Dies beinhaltet die Neukalkulation der kryptografischen Hashes für alle nachfolgenden Blöcke, um sicherzustellen, dass die Verknüpfungen in der Blockchain intakt bleiben. Da jeder Block in der Blockchain einen Hash des vorherigen Blocks enthält, ist es notwendig, nach einer Blocklöschung die Hashes der verbleibenden Blöcke anzupassen. Diese Neukalkulation wird durch eine spezialisierte Software durchgeführt, die sicherstellt, dass die Konsistenz der Blockchain gewahrt bleibt.

Die Blockchain wird ebenfalls auf Konsistenzfehler überprüft, um sicherzustellen, dass keine Unstimmigkeiten durch die Löschung auftreten. Alle beteiligten Knoten im Netzwerk führen die Hash-Berechnungen dezentral aus, und die Ergebnisse werden validiert, um zu garantieren, dass die Blockchain weiterhin korrekt funktioniert.

Die automatische Neukalkulation der Hashes nach einer Löschung sorgt dafür, dass die Blockchain weiterhin unverändert und manipulationssicher bleibt. Diese Konsistenzprüfungen stellen sicher, dass die Blockchain nach der Löschung eines Blocks genauso sicher und unveränderlich bleibt wie zuvor. Dies verhindert potenzielle Manipulationen oder Sicherheitslücken, die durch die Löschung entstehen könnten.

### 5. Technische und Compliance-Aspekte

Die Blockchain wird so konzipiert, dass sie den technischen und regulatorischen Anforderungen, wie z.B. der Datenschutz-Grundverordnung (DSGVO), entspricht. Dies bedeutet, dass personenbezogene Daten auf Antrag gelöscht werden können, ohne die grundlegende Struktur der Blockchain zu beeinträchtigen. Durch die Einführung des Archiv-Logs und der Löschflaggen bleibt die Löschung nachvollziehbar, während gleichzeitig die rechtlichen Anforderungen an die Datenlöschung erfüllt werden.

Validatoren im Netzwerk sind dafür verantwortlich, dass jeder Löschantrag in Übereinstimmung mit den geltenden Gesetzen geprüft wird. Dies könnte zusätzliche Schritte umfassen, wie die Überprüfung der Identität des Antragsstellers oder die Sicherstellung, dass die Löschung nicht gegen andere rechtliche Verpflichtungen verstößt.

Die Blockchain wird durch diese Erweiterungen sowohl flexibel als auch konform mit rechtlichen Anforderungen. Unternehmen können gesetzliche Verpflichtungen zur Datenlöschung erfüllen, ohne die Unveränderlichkeit und Integrität der Blockchain zu gefährden. Dies ist besonders wichtig in stark regulierten Branchen wie dem Finanzsektor, dem Gesundheitswesen oder im Umgang mit personenbezogenen Daten.

Im Folgenden werden beispielhaft einige Aspekte und Vorteile der vorliegenden Erfindung erläutert.

Flexibilität: Die Möglichkeit, Blöcke nachträglich zu löschen, erweitert das Einsatzspektrum der Blockchain erheblich. Anwendungsfälle, die bislang ausgeschlossen waren, weil eine dauerhafte Speicherung nicht erwünscht oder möglich war, können nun umgesetzt werden.

Compliance: Die Erfindung erlaubt es, gesetzliche Vorschriften zur Löschung von Daten, insbesondere im Zusammenhang mit Datenschutzgesetzen wie der DSGVO, zu erfüllen, ohne die Grundprinzipien der Blockchain-Technologie zu gefährden. So können Unternehmen gleichzeitig die Vorteile der Blockchain nutzen und dennoch ihre gesetzlichen Pflichten erfüllen.

Transparenz und Nachvollziehbarkeit: Durch das Archiv-Log und die zugehörigen Löschgründe wird die gesamte Historie der Blockchain auch nach der Löschung von Blöcken vollständig dokumentiert. Dies sorgt dafür, dass jede Löschung nachvollzogen werden kann, was die Transparenz des Systems stärkt.

Die vorliegende Erfindung stellt eine bedeutende Erweiterung der Blockchain-Technologie dar, da sie es ermöglicht, Blöcke nachträglich zu löschen, ohne die Integrität der Blockchain zu beeinträchtigen. Sie bietet Flexibilität, um auf sich ändernde gesetzliche Anforderungen zu reagieren, und stellt gleichzeitig sicher, dass die Transparenz und Sicherheit der Blockchain gewahrt bleiben. Die Kombination aus einer löschbaren Blockstruktur, einem standardisierten Löschprotokoll, einem Archiv-Log und Mechanismen zur Sicherstellung der Integrität macht dieses System zu einer vielseitigen Lösung, die Blockchain-Systeme in neuen Anwendungsfeldern einsetzbar macht.

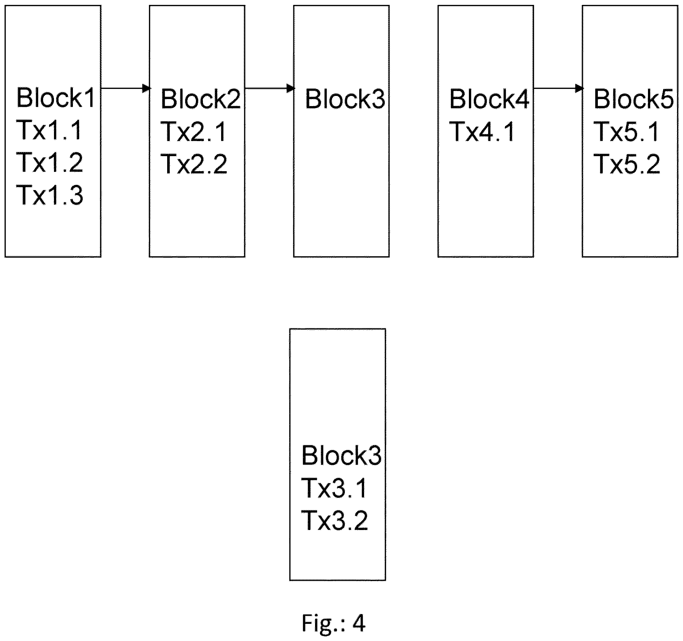

In Figur 3 und 4 werden folgende Verfahrensschritte beispielhaft ausgeführt.
1. Erweiterung der Blockstruktur:
   1.1 Löschflag
      - Jeder Block wird um eine zusätzliche Datenstruktur erweitert, die als "Löschflag" bezeichnet wird.
      - Die Löschflag ist ein booleaner Wert (true/false), der standardmäßig auf false gesetzt ist.
   1.2 Löschgrund:
      - Ein zusätzliches Feld, das den Grund für die Löschung als Text speichert.
      - Dieses Feld bleibt leer, bis ein Löschantrag genehmigt wird.
2. Löschprotokoll:
   2.1 Antragstellung:
      - Ein Löschantrag wird an das Blockchain-Netzwerk gestellt, der die Identifikation des zu löschenden Blocks (z.B. durch seinen Hash-Wert) und den Löschgrund enthält.
      - Der Antragsteller muss sich gegenüber dem Netzwerk authentifizieren und autorisieren, um sicherzustellen, dass nur berechtigte Entitäten Löschanträge stellen können. Dies ist im Regelfall der Administrator des Blockchain Netzwerks
   2.2 Prüfung des Antrags:
      - Validatoren (Netzwerkknoten, die für die Validierung zuständig sind) prüfen den Löschantrag.
      - Die Prüfung umfasst die Verifizierung der Authentizität des Antragstellers und die Bewertung des Löschgrunds.
      - Eine Abstimmung unter den Validatoren findet statt, bei der eine vordefinierte Mehrheit (z.B. 75%) dem Antrag zustimmen muss. Diese Mehrheit wird durch die Mainchain gestellt, welche immer als Hauptentität fungiert.
3. Löschung des Blocks:
   3.1 Aktivierung der Löschflagge:
      - Nach Zustimmung wird die Löschflagge des entsprechenden Blocks auf true gesetzt.
      - Der Löschgrund wird in das entsprechende Feld eingetragen.
      - Anschliessend ist die Datei, die mit diesem Block verknüpft ist, nicht mehr entschlüsselbar und damit nicht mehr lesbar
   3.2 Entfernung des Blocks:
      - Der Block wird aus der aktiven Blockchain entfernt und in ein separates "Archiv-Log" übertragen.
      - Das Archiv-Log ist eine separate Datenstruktur, die alle gelöschten Blöcke und deren Transaktionen speichert.
4. Neukalkulation und Validierung der Blockchain:
   4.1 Hash-Neuberechnung:
      - Alle nachfolgenden Blöcke müssen neu berechnet werden, um die Integrität der Blockchain zu gewährleisten.
      - Dies umfasst die Neukalkulation der Hash-Werte für alle betroffenen Blöcke.
   4.2 Konsistenzprüfung:
      - Die Blockchain wird auf Konsistenz überprüft, indem die Hash-Werte und Transaktionsdaten validiert werden.
      - Jeder Block wird auf seine Integrität hin überprüft, um sicherzustellen, dass keine Manipulation stattgefunden hat.
5. Archiv-Log:
   5.1 Speicherung gelöschter Blöcke:
      - Gelöschte Blöcke und deren Transaktionen werden im Archiv-Log gespeichert.
      - Das Archiv-Log ist nur für autorisierte Entitäten zugänglich, um Datenschutz und Compliance sicherzustellen.
   5.2 Zugriff und Transparenz:
      - Das Archiv-Log ermöglicht es, die Historie der Blockchain nachzuvollziehen, auch wenn Daten gelöscht wurden.
      - Die Transparenz wird durch detaillierte Protokollierung der Löschvorgänge und Zugriffskontrollen gewährleistet.
      - Durch Einsicht in das Archiv-Log können bereits gelöschte Daten und Blockstrukturen nicht mehr hergestellt werden.
6. Rechtliche und Compliance-Aspekte:
   6.1 Erfüllung von Anforderungen:
      - Das System ermöglicht die Erfüllung gesetzlicher Vorgaben, wie z.B. der DSGVO, indem es die Löschung personenbezogener Daten auf Antrag unterstützt.
      - Die Einführung des Archiv-Logs stellt sicher, dass die Löschung transparent und nachvollziehbar bleibt.
   6.2 Datenschutz:
      - Durch Zugriffskontrollen und Authentifizierungsmechanismen wird sichergestellt, dass nur berechtigte Entitäten auf gelöschte Daten zugreifen können.
7. Implementierung und Integration:
   7.1 Software-Architektur:
      - Die Implementierung erfolgt in der Blockchain durch Erweiterung der bestehenden Datenstrukturen und Protokolle.
      - Das Löschprotokoll wird als zusätzlicher Konsensmechanismus in das bestehende Netzwerkprotokoll integriert.
   7.2 Netzwerk-Updates:
      - Innerhalb einer Datenbankanwendung kann wie gewohnt weitergearbeitet werden. Durch Nutzung der Löschfunktion, werden verschlüsselte Dateien unwiederbringlich zerstört

Figur 4 zeigt die Blockchain gemäß Figur 3 nach dem erfindungsgemäßen Löschvorgang. Unten ist der gelöschte Block angetragen. Die Ketten werden nunmehr wieder mittels Referenzen und ggf. Neuberechnung der Hash Werte miteinander verbunden.

Im Folgenden werden Beispielfunktionen der technischen Nachvollziehbarkeit in C# aufgezeigt, welche das Verfahren beispielhaft gemäß einem Aspekt der vorliegenden Erfindung verdeutlichen:

```
 using System;
 using System.Collections.Generic;
 using System.Security.Cryptography;
 using System.Text;
  
 public dass Block
 {
  
     public int Index { get; set; }
     public DateTime Timestamp { get; set; }
     public string PreviousHash { get; set; }
     public string Hash { get; set; }
     public List<string> Transactions { get; set; }
     public bool IsDeleted { get; set; }
     public string DeletionReason { get; set; }
  
     public Block(int index, DateTime timestamp, List<string>
     transactions, string previousHash = "")
     {
  
          Index = index;
          Timestamp = timestamp;
          Transactions = transactions;
          PreviousHash = previousHash;
          Hash = CalculateHash();
          IsDeleted = false;
          DeletionReason = string.Empty;
     }
  
     public string CalculateHash()
     {
  
          SHA256 sha256 = SHA256.Create();
          byte[] inputBytes = Encoding.ASCII.GetBytes($"{Index}-
          {Timestamp}-{PreviousHash}-{string.Join(",", Transactions)}-
          {IsDeleted}");
          byte[] outputBytes = sha256.ComputeHash(inputBytes);
          return Convert.ToBase64String(outputBytes);
     }
 }
 public dass Blockchain
 {
  
     public List<Block> Chain { get; set; }
     public List<Block> ArchiveLog { get; set; }
     public Blockchain()
     {
          Chain = new List<Block> { CreateGenesisBlock() };
          ArchiveLog = new List<Block>();
     }
  
     private Block CreateGenesisBlock()
     {
          return new Block(0, DateTime.Now, new List<string>(), "0");
     }
     public Block GetLatestBlock()
     {
          return Chain[Chain.Count - 1];
     }
     public void AddBlock(Block newBlock)
     {
  
          newBlock.PreviousHash = GetLatestBlock().Hash;
          newBlock.Hash = newBlock.CalculateHash();
          Chain.Add(newBlock);
     }
     public void DeleteBlock(int index, string reason)
     {
          if (index <= 0 ∥ index >= Chain. Count)
          {
               throw new ArgumentException("Invalid block index for
               deletion.");
          }
          Block blockToDelete = Chain[index];
          blockToDelete.IsDeleted = true;
          blockToDelete.DeletionReason = reason;
          ArchiveLog.Add(blockToDelete);
          Chain.RemoveAt(index);
  
          // Recalculate hashes for remaining blocks
          for (int i = index; i < Chain.Count; i++)
          {
               Chain[i].PreviousHash = i == 0 ? "0" : Chain[i -
               1].Hash;
               Chain[i].Hash = Chain[i].CalculateHash();
          }
     }
  
     public bool IsValidChain()
     {
          for (int i = 1; i < Chain.Count; i++)
          {
  
               Block currentBlock = Chain[i];
               Block previousBlock = Chain[i - 1];
  
               if (currentBlock.Hash != currentBlock.CalculateHash())
                {
                     return false;
                }
               if (currentBlock.PreviousHash != previousBlock.Hash)
                {
                     return false;
                }
          }
          return true;
     }
 }
```

**Es folgt eine Beispielnutzung gemäß einem Aspekt der vorliegenden Erfindung:**

```
 public dass Program
 {
     public static void Main(string[] args)
     {
          Blockchain myBlockchain = new Blockchain();
          myBlockchain.AddBlock(new Block(1, DateTime.Now, new
          List<string> { "Tx1", "Tx2" }));
          myBlockchain.AddBlock(new Block(2, DateTime.Now, new
          List<string> { "Tx3" }));
          myBlockchain.AddBlock(new Block(3, DateTime.Now, new
          List<string> { "Tx4", "Tx5" }));
  
          Console.WriteLine("Blockchain valid: " +
          myBlockchain.IsValidChain());
  
          // Deleting Block 2
          myBlockchain.DeleteBlock(2, "Data correction");
  
          Console.WriteLine("Blockchain valid after deletion: " +
          myBlockchain.IsValidChain());
  
          foreach (Block block in myBlockchain.Chain)
          {
               Console.WriteLine($"Block {block.Index} - Hash:
               {block.Hash}, Previous Hash: {block.PreviousHash}");
          }
  
          Console.WriteLine("Archive Log:");
          foreach (Block block in myBlockchain.ArchiveLog)
          {
               Console.WriteLine($"Deleted Block {block.Index} -
               Reason: {block.DeletionReason}");
          }
     }
 }
```

Erklärung der Implementierung gemäß einem Aspekt der vorliegenden Erfindung:
1. Block-Klasse:
   - Enthält grundlegende Informationen wie Index, Zeitstempel, vorheriger Hash, aktueller Hash, Transaktionen, Löschflagge und Löschgrund.
   - Berechnet den Hash des Blocks basierend auf seinen Daten.
2. Blockchain-Klasse:
   - Initialisiert die Blockchain mit einem Genesis-Block.
   - Fügt neue Blöcke hinzu, aktualisiert den vorherigen Hash und berechnet den neuen Hash.
   - Implementiert eine DeleteBlock-Methode, die einen Block als gelöscht markiert, den Grund speichert und den Block in das Archiv-Log verschiebt. Die Blockchain wird anschließend neu berechnet, um die Integrität sicherzustellen.
   - Prüft die Gültigkeit der Blockchain mit der IsValidChain-Methode.
3. Program-Klasse:
   - Demonstriert die Nutzung der Blockchain, einschließlich des Hinzufügens von Blöcken und der Löschung eines Blocks.

Spacechainblocknutzung innerhalb der Blockchain:
Spacechain-Blöcke innerhalb einer Blockchain sind spezialisierte Blöcke, die es ermöglichen, eine separate, aber miteinander verbundene Kette (Spacechain) innerhalb der Haupt-Blockchain zu erstellen. Diese Struktur kann verwendet werden, um bestimmte Transaktionen oder Daten unabhängig von der Hauptkette zu verwalten, während sie immer noch die Sicherheit und Integrität der Haupt-Blockchain nutzen. Spacechain-Blöcke können verschiedene Anwendungen haben, wie z.B. die Durchführung spezieller Aufgaben, das Testen neuer Funktionen oder das Hosten von Anwendungen, die andere Anforderungen haben als die Haupt-Blockchain.

Merkmale von Spacechain-Blöcken (Blöcke der gesonderten Blockchain)
4. Eingebettete Kette:
   - Spacechain-Blöcke bilden eine eigene Kette innerhalb der Haupt-Blockchain. Diese Kette kann ihre eigenen Regeln und Protokolle haben, die von der Haupt-Blockchain unabhängig sind.
5. Verknüpfung zur Haupt-Blockchain:
   - Jeder Spacechain-Block ist mit einem Block der Haupt-Blockchain verknüpft. Dies stellt sicher, dass die Spacechain weiterhin von der Sicherheit und Integrität der Haupt-Blockchain profitiert.
6. Separate Validierung:
   - Spacechain-Blöcke können ihre eigenen Konsensmechanismen und Validierungsprotokolle verwenden. Dies ermöglicht eine flexible Anpassung an spezielle Anforderungen oder Tests neuer Technologien.
7. Nutzungsszenarien:
   - Spacechain-Blöcke können für verschiedene Zwecke verwendet werden, wie z.B. das Testen von Funktionen, die Durchführung spezieller Transaktionen, die Verwaltung von Anwendungen oder das Hosten von intelligenten Verträgen, die unabhängig von der Haupt-Blockchain sind.

### Struktur eines Spacechain-Blocks

Ein Spacechain-Block hat eine ähnliche Struktur wie ein regulärer Block in der Haupt-Blockchain, enthält aber zusätzliche Felder und Verknüpfungen zur Spacechain:
- Index: Der Index des Blocks in der Spacechain.
- Zeitstempel: Der Zeitstempel, wann der Block erstellt wurde.
- Vorheriger Hash: Der Hash des vorherigen Blocks in der Spacechain.
- Hash: Der aktuelle Hash des Blocks.
- Transaktionen: Die Transaktionen, die im Block enthalten sind.
- Verknüpfung zur Haupt-Blockchain: Ein Verweis auf den entsprechenden Block in der Haupt-Blockchain.
- Spacechain-spezifische Daten: Daten, die spezifisch für die Spacechain sind, wie z.B. Metadaten oder spezielle Transaktionsdaten.

### Beispiel einer Spacechain-Blockstruktur in C#

Es folgt ein einfaches Beispiel für die Implementierung eines Spacechain-Blocks innerhalb einer Blockchain in C#:

```
 using System;
 using System.Collections.Generic;
 using System.Security.Cryptography;
 using System.Text;
 public dass SpacechainBlock
 {
     public int Index { get; set; }
     public DateTime Timestamp { get; set; }
     public string PreviousHash { get; set; }
     public string Hash { get; set; }
     public List<string> Transactions { get; set; }
     public string MainChainBlockHash { get; set; } //
     Verknüpfung zur Haupt-Blockchain
     public SpacechainBlock(int index, DateTime timestamp,
     List<string> transactions, string previousHash = "", string
     mainChainBlockHash = "")
      {
           Index = index; Timestamp = timestamp;
    Transactions = transactins;
           PreviousHash = previousHash;
           MainChainBlockHash = mainChainBlockHash;
           Hash = CalculateHash(); }
     public string CalculateHash()
      {
           SHA256 sha256 = SHA256.Create();
           byte[] inputBytes = Encoding.ASCII.GetBytes($"{Index}-
           {Timestamp}-{PreviousHash}-{string.Join(",", Transactions)}-
           {MainChainBlockHash}");
           byte[] outputBytes = sha256.ComputeHash(inputBytes);
           return Convert.ToBase64String(outputBytes);
           } }
           public dass Spacechain
           {
     public List<SpacechainBlock> Chain { get; set; }
     public Spacechain()
      {
           Chain = new List<SpacechainBlock> {
           CreateGenesisBlock() };
      }
     private SpacechainBlock CreateGenesisBlock()
      {
           return new SpacechainBlock(0, DateTime.Now, new
           List<string>(), "0", "0");
      }
     public SpacechainBlock GetLatestBlock()
      {
           return Chain[Chain.Count - 1]; }
     public void AddBlock(SpacechainBlock newBlock)
      {
           newBlock.PreviousHash = GetLatestBlock() .Hash;
           newBlock.Hash = newBlock.CalculateHash();
           Chain.Add(newBlock); }
     public bool IsValidChain()
      {
           for (int i = 1; i < Chain.Count; i++)
           {
                 SpacechainBlock currentBlock = Chain[i];
                 SpacechainBlock previousBlock = Chain[i - 1];
                 if (currentBlock.Hash !=
                 currentBlock.CalculateHash())
                 {
                       return false; }
                 if (currentBlock.PreviousHash !=
                 previousBlock.Hash)
                 {
                       return false;
                       } }
           return true;
```

### Nutzung der Spacechain in der Haupt-Blockchain

Es folgt ein Beispiel, wie die Spacechain in die Haupt-Blockchain integriert werden kann:

```
 public dass MainBlockchain
 {
     public List<Block> Chain { get; set; }
     public List<Spacechain> Spacechains { get; set; }
     public MainBlockchain()
      { Chain = new Lst<lock> { CreateGenesisBlock() };
          Spacechains = new List<Spacechain>(); }
     private Block CreateGenesisBlock()
      {
           return new Block(0, DateTime.Now, new List<string>(), "0"); }
     public Block GetLatestBlock()
      {
           return Chain[Chain.Count - 1];
      }
     public void AddBlock(Block newBlock)
      {
           newBlock.PreviousHash = GetLatestBlock() .Hash;
           newBlock.Hash = newBlock.CalculateHash();
           Chain.Add(newBlock); }
     public void AddSpacechain(Spacechain newSpacechain)
      {
           Spacechains.Add(newSpacechain); }
     public bool IsValidChain()
      {
           for (int i = 1; i < Chain.Count; i++)
           {
                 Block currentBlock = Chain[i];
                 Block previousBlock = Chain[i - 1];
                 if (currentBlock.Hash !=
                 currentBlock.CalculateHash())
                 {
                       return false;
                 }
                 if (currentBlock.PreviousHash !=
                 previousBlock.Hash)
                 {
                       return false; } }
           foreach (var spacechain in Spacechains)
           {
                 if (!spacechain.IsValidChain())
                 {
                       return false;
           return true;
           } }
           public dass Program
           {
     public static void Main(string[] args)
      {
           MainBlockchain myBlockchain = new MainBlockchain();
           // Hinzufügen von Blöcken zur Haupt-Blockchain
           myBlockchain.AddBlock(new Block(1, DateTime.Now, new
           List<string> { "Tx1", "Tx2" }));
           myBlockchain.AddBlock(new Block(2, DateTime.Now, new
           List<string> { "Tx3" }));
           // Erstellen und Hinzufügen einer Spacechain
           Spacechain mySpacechain = new Spacechain();
           mySpacechain.AddBlock(new SpacechainBlock(1,
           DateTime.Now, new List<string> { "SC Tx1", "SC Tx2" },
           mySpacechain.GetLatestBlock().Hash,
           myBlockchain.GetLatestBlock().Hash));
           myBlockchain.AddSpacechain(mySpacechain);
           Console.WriteLine("Blockchain valid: " +
           myBlockchain.IsValidChain());
           // Ausgabe der Haupt-Blockchain
           foreach (Block block in myBlockchain.Chain)
           {
                 Console.WriteLine($"Block {block.Index} - Hash:
                 {block.Hash}, Previous Hash: {block.PreviousHash}");
           }
           // Ausgabe der Spacechain
           foreach (SpacechainBlock block in mySpacechain.Chain)
           {
                 Console.WriteLine($"Spacechain Block {block.Index}
                 - Hash: {block.Hash}, Previous Hash: {block.PreviousHash},
                 MainChain Block Hash: {block.MainChainBlockHash}");
                 } } }
```

Eine Spacechain ist eine spezielle Kette innerhalb der Haupt-Blockchain, die für spezifische Aufgaben konzipiert ist. Im Wesentlichen stellt die Spacechain eine eigenständige, aber mit der Haupt-Blockchain verbundene Struktur dar. Diese separate Kette ermöglicht die Durchführung spezialisierter Prozesse oder Anwendungen, ohne die Haupt-Blockchain direkt zu beeinflussen oder zu belasten. Die Spacechain bleibt jedoch durch bestimmte Mechanismen eng mit der Haupt-Blockchain verknüpft. Jeder Block in der Spacechain enthält Verweise auf die entsprechenden Blöcke in der Haupt-Blockchain. Diese Verknüpfung stellt sicher, dass es eine klare und nachvollziehbare Verbindung zwischen den beiden Ketten gibt, sodass alle Daten der Spacechain mit der Haupt-Blockchain synchronisiert bleiben können.

Ein mögliches Merkmal der Spacechain ist die Möglichkeit zur separaten Validierung. Das bedeutet, dass sie ihre eigenen Validierungsprotokolle implementieren kann, unabhängig von den Validierungsmechanismen der Haupt-Blockchain. Dadurch kann die Spacechain für bestimmte Aufgaben oder Anwendungsfälle optimiert werden, die möglicherweise andere Anforderungen an die Sicherheit, Geschwindigkeit oder Verarbeitungslogik haben. Diese Unabhängigkeit ermöglicht es, spezifische Validierungsregeln zu definieren, die nicht unbedingt den strengen Anforderungen der Haupt-Blockchain entsprechen müssen.

In der Praxis bietet dieses Konzept eine flexible und erweiterbare Struktur, die verschiedene Nutzungsszenarien unterstützt. Spacechains können für eine Vielzahl von Anwendungen verwendet werden, einschließlich Tests, Prototyping oder Aufgaben, die von der Haupt-Blockchain isoliert ausgeführt werden sollen. Sie bieten auch die Möglichkeit, spezialisierte Funktionen zu implementieren, wie etwa für Forschungszwecke oder branchenspezifische Anforderungen, ohne die Integrität und Effizienz der Haupt-Blockchain zu beeinträchtigen. Durch diese Flexibilität können Spacechains zur Realisierung unterschiedlicher Szenarien und zur Anpassung an spezifische Anforderungen beitragen, was die Erweiterbarkeit und Anpassungsfähigkeit des gesamten Blockchain-Systems erheblich verbessert.

Die sogenannte Spacechain kann auch erfindungsgemäß als die gesonderte Blockchain bezeichnet werden. Spaceblocks können auch als Blocks der gesonderten Blockchain bezeichnet werden.

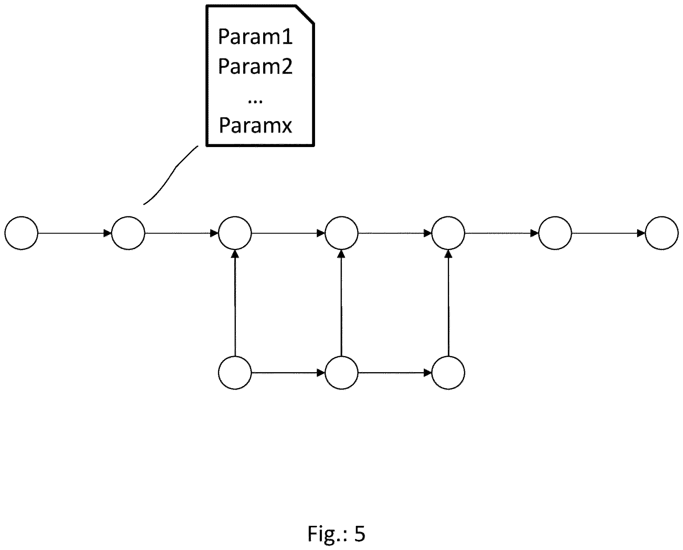

Figur 5 zeigt eine schematische Blockchain in der die mittleren drei Blöcke gelöscht werden sollen. Es erfolgt ein Bereitstellen einer herkömmlichen Blockchain aufweisend Blöcke und Referenzen wie dies vorliegend oben eingezeichnet ist. Diese Blöcke und Referenzen bilden eine verkettete Liste und jeder Block weist mindestens einen Parameter auf, wie dies beispielhaft für einen Block über dessen Parameterliste gezeigt ist.

Ferner erfolgt ein Betreiben der herkömmlichen Blockchain, siehe oben in einer in sich geschlossenen netzwerktechnisch eingerichteten Infrastruktur, beispielsweise ein Firmennetzwerk, aufweisend Netzwerkknoten, wobei die herkömmliche Blockchain redundant auf mindestens eine Teilmenge der Netzwerkknoten verteilt wird, was vorliegend nicht eingezeichnet ist. Es wird lediglich die logische Struktur der Blockchain ohne Redundanzen gezeigt.

Ferner erfolgt ein Erstellen einer Löschanfrage von drei Blöcken in der Mitte der herkömmlichen Blockchain durch einen Netzwerkknoten, welche an weitere Netzwerkknoten übermittelt wird. Typischerweise sind dies Server innerhalb des Netzwerks bzw. die Netzwerkknoten können auch auf einem Rechner als Agenten ausgeführt werden.

Ferner erfolgt bei einem positiven Bescheiden der Löschanfrage durch die Netzwerkknoten gemäß einer Bescheidungsmetrik ein Erstellen einer gesonderten Blockchain, was vorliegend unten eingezeichnet ist. Diese gesonderte Blockchain umfasst Referenz auf jeweils einen zu löschenden Block der herkömmlichen Blockchain. Dies ist durch Pfeile von unten nach oben eingezeichnet. Somit sind also oben die herkömmliche Blockchain verdeutlicht und unten die gesonderte Blockchain.

## Patentansprüche

1. Verfahren zum sicheren Entfernen von Blöcken aus einer bestehenden Blockchain in einer abgeschlossenen Infrastruktur, aufweisend:
- ein Bereitstellen (100) einer herkömmlichen Blockchain aufweisend Blöcke und Referenzen, welche eine verkettete Liste bilden und jeder Block mindestens einen Parameter aufweist;
- ein Betreiben (101) der herkömmlichen Blockchain in einer in sich geschlossenen netzwerktechnisch eingerichteten Infrastruktur aufweisend Netzwerkknoten, wobei die herkömmliche Blockchain redundant auf mindestens eine Teilmenge der Netzwerkknoten verteilt (102) wird;
- ein Erstellen (103) einer Löschanfrage mindestens eines Blocks der herkömmlichen Blockchain durch einen Netzwerkknoten, welche an weitere Netzwerkknoten übermittelt (104) wird;
- bei einem positiven Bescheiden (105) der Löschanfrage durch die Netzwerkknoten gemäß einer Bescheidungsmetrik ein Erstellen (106) einer gesonderten Blockchain, aufweisend mindestens einen Block mit einem Löscheintrag, wobei jeweils jeder Block der gesonderten Blockchain eine Referenz auf jeweils einen zu löschenden Block der herkömmlichen Blockchain aufweist; und
- ein Ausführen (107) der Löschanfrage gemäß der gesonderten Blockchain durch die entsprechenden Netzwerkknoten.

2. Verfahren nach Anspruch 1, **dadurch gekennzeichnet, dass** nach dem Ausführen der Löschanfrage Blöcke, die den zu löschenden Blöcken nachfolgen, angepasst werden.

3. Verfahren nach Anspruch 1 oder 2, **dadurch gekennzeichnet, dass** nach dem Ausführen der Löschanfrage Blöcke, die den zu löschenden Blöcken nachfolgen, bezüglich deren abgespeicherten Referenzen, Prüfsummen, Hashwerte, Konsistenzinformationen und/ oder Integritätsinformationen angepasst werden.

4. Verfahren nach einem der vorhergehenden Ansprüche, **dadurch gekennzeichnet, dass** zu löschende Blöcke in einer anderen Blockchain als der herkömmlichen Blockchain und/ oder einem Archiv abgespeichert werden.

5. Verfahren nach einem der vorhergehenden Ansprüche, **dadurch gekennzeichnet, dass** die Bescheidungsmetrik einer Mehrheitsabstimmung oder einer festgelegten Zustimmungsquote entspricht.

6. Verfahren nach einem der vorhergehenden Ansprüche, **dadurch gekennzeichnet, dass** die Bescheidungsmetrik in Abhängigkeit einer Validitätsprüfung, Authentizitätsprüfung und/ oder bestehender Blöcke evaluiert wird.

7. Verfahren nach einem der vorhergehenden Ansprüche, **dadurch gekennzeichnet, dass** das Ausführen (107) der Löschanfrage derart erfolgt, dass der mindestens eine Block jeweils gelöscht wird, die Referenz auf den Block aufgehoben wird, der Block überschrieben wird, eine Entschlüsselungsinformation verworfen wird, der mindestens eine Parameter des Blocks gelöscht wird, ein Hashwert verändert und/ oder der Block verschlüsselt wird.

8. Verfahren nach einem der vorhergehenden Ansprüche, **dadurch gekennzeichnet, dass** die Löschanfrage mindestens einen Löschgrund aufweist und/ oder in Abhängigkeit dieses Löschgrunds ein Wiederherstellungsversuch unternommen wird.

9. Verfahren nach einem der vorhergehenden Ansprüche, **dadurch gekennzeichnet, dass** die herkömmliche Blockchain mittels einer Schnittstelle in die geschlossene Infrastruktur importiert wird.

10. Verfahren nach einem der vorhergehenden Ansprüche, **dadurch gekennzeichnet, dass** die Blöcke der herkömmlichen Blockchain jeweils auf ein Dokument verweisen, welches bei einer entsprechenden Löschanfrage für die Bearbeitung gesperrt wird.

11. Verfahren nach einem der vorhergehenden Ansprüche, **dadurch gekennzeichnet, dass** die geschlossene netzwerktechnisch eingerichtete Infrastruktur technisch von einem weiteren angeschlossenen Netzwerk getrennt ist.

12. Verfahren nach einem der vorhergehenden Ansprüche, **dadurch gekennzeichnet, dass** die Netzwerkknoten in der Infrastruktur verteilt als Hardware- und/ oder Softwarekomponenten vorliegen.

13. Systemanordnung zum sicheren Entfernen von Blöcken aus einer bestehenden Blockchain in einer abgeschlossenen Infrastruktur, aufweisend:
- eine Schnittstelleneinheit eingerichtet zum Bereitstellen (100) einer herkömmlichen Blockchain aufweisend Blöcke und Referenzen, welche eine verkettete Liste bilden und jeder Block mindestens einen Parameter aufweist;
- eine Infrastruktur eingerichtet zum Betreiben (101) der herkömmlichen Blockchain in der in sich geschlossenen netzwerktechnisch eingerichteten Infrastruktur aufweisend Netzwerkknoten, wobei die herkömmliche Blockchain redundant auf mindestens eine Teilmenge der Netzwerkknoten verteilt (102) wird;
- eine Anfrageeinheit eingerichtet zum Erstellen (103) einer Löschanfrage mindestens eines Blocks der herkömmlichen Blockchain durch einen Netzwerkknoten, welche an weitere Netzwerkknoten übermittelt (104) wird;
- eine Blockchaineinheit eingerichtet bei einem positiven Bescheiden (105) der Löschanfrage durch die Netzwerkknoten gemäß einer Bescheidungsmetrik zum Erstellen (106) einer gesonderten Blockchain, aufweisend mindestens einen Block mit einem Löscheintrag, wobei jeweils jeder Block der gesonderten Blockchain eine Referenz auf jeweils einen zu löschenden Block der herkömmlichen Blockchain aufweist; und
- eine Löscheinheit eingerichtet zum Ausführen (107) der Löschanfrage gemäß der gesonderten Blockchain durch die entsprechenden Netzwerkknoten.

14. Computerprogrammprodukt, umfassend Befehle, die bei der Ausführung des Programms durch mindestens einen Computer diesen veranlassen, die Schritte des Verfahrens nach einem der Ansprüche 1 bis 12 auszuführen.

15. Computerlesbares Speichermedium, umfassend Befehle, die bei der Ausführung durch mindestens einen Computer diesen veranlassen, die Schritte des Verfahrens nach einem der Ansprüche 1 bis 12 auszuführen.

## Geänderte Patentansprüche

### Geänderte Patentansprüche gemäss Regel 137(2) EPÜ.

1. Verfahren zum sicheren Entfernen von Blöcken aus einer bestehenden Blockchain in einer abgeschlossenen Infrastruktur, aufweisend:
- ein Bereitstellen (100) einer herkömmlichen Blockchain aufweisend Blöcke und Referenzen, welche eine verkettete Liste bilden und jeder Block mindestens einen Parameter aufweist;
- ein Betreiben (101) der herkömmlichen Blockchain in einer in sich geschlossenen netzwerktechnisch eingerichteten Infrastruktur aufweisend Netzwerkknoten, wobei die herkömmliche Blockchain redundant auf mindestens eine Teilmenge der Netzwerkknoten verteilt (102) wird;
- ein Erstellen (103) einer Löschanfrage mindestens eines Blocks der herkömmlichen Blockchain durch einen Netzwerkknoten, welche an weitere Netzwerkknoten übermittelt (104) wird;
- bei einem positiven Bescheiden (105) der Löschanfrage durch die Netzwerkknoten gemäß einer Bescheidungsmetrik ein Erstellen (106) einer gesonderten Blockchain, aufweisend mindestens einen Block mit einem Löscheintrag, wobei jeweils jeder Block der gesonderten Blockchain eine Referenz auf jeweils einen zu löschenden Block der herkömmlichen Blockchain aufweist; und
- ein Ausführen (107) der Löschanfrage gemäß der gesonderten Blockchain durch die entsprechenden Netzwerkknoten, wobei die herkömmliche Blockchain mittels einer Schnittstelle in die geschlossene Infrastruktur importiert wird; die Blöcke der herkömmlichen Blockchain jeweils auf ein Dokument verweisen, welches bei einer entsprechenden Löschanfrage für die Bearbeitung gesperrt wird und die geschlossene netzwerktechnisch eingerichtete Infrastruktur technisch von einem weiteren angeschlossenen Netzwerk getrennt ist.

2. Verfahren nach Anspruch 1, **dadurch gekennzeichnet, dass** nach dem Ausführen der Löschanfrage Blöcke, die den zu löschenden Blöcken nachfolgen, angepasst werden.

3. Verfahren nach Anspruch 1 oder 2, **dadurch gekennzeichnet, dass** nach dem Ausführen der Löschanfrage Blöcke, die den zu löschenden Blöcken nachfolgen, bezüglich deren abgespeicherten Referenzen, Prüfsummen, Hashwerte, Konsistenzinformationen und/ oder Integritätsinformationen angepasst werden.

4. Verfahren nach einem der vorhergehenden Ansprüche, **dadurch gekennzeichnet, dass** zu löschende Blöcke in einer anderen Blockchain als der herkömmlichen Blockchain und/ oder einem Archiv abgespeichert werden.

5. Verfahren nach einem der vorhergehenden Ansprüche, **dadurch gekennzeichnet, dass** die Bescheidungsmetrik einer Mehrheitsabstimmung oder einer festgelegten Zustimmungsquote entspricht.

6. Verfahren nach einem der vorhergehenden Ansprüche, **dadurch gekennzeichnet, dass** die Bescheidungsmetrik in Abhängigkeit einer Validitätsprüfung, Authentizitätsprüfung und/ oder bestehender Blöcke evaluiert wird.

7. Verfahren nach einem der vorhergehenden Ansprüche, **dadurch gekennzeichnet, dass** das Ausführen (107) der Löschanfrage derart erfolgt, dass der mindestens eine Block jeweils gelöscht wird, die Referenz auf den Block aufgehoben wird, der Block überschrieben wird, eine Entschlüsselungsinformation verworfen wird, der mindestens eine Parameter des Blocks gelöscht wird, ein Hashwert verändert und/ oder der Block verschlüsselt wird.

8. Verfahren nach einem der vorhergehenden Ansprüche, **dadurch gekennzeichnet, dass** die Löschanfrage mindestens einen Löschgrund aufweist und/ oder in Abhängigkeit dieses Löschgrunds ein Wiederherstellungsversuch unternommen wird.

9. Verfahren nach einem der vorhergehenden Ansprüche, **dadurch gekennzeichnet, dass** die Netzwerkknoten in der Infrastruktur verteilt als Hardware- und/ oder Softwarekomponenten vorliegen.

10. Systemanordnung zum sicheren Entfernen von Blöcken aus einer bestehenden Blockchain in einer abgeschlossenen Infrastruktur, aufweisend:
- eine Schnittstelleneinheit eingerichtet zum Bereitstellen (100) einer herkömmlichen Blockchain aufweisend Blöcke und Referenzen, welche eine verkettete Liste bilden und jeder Block mindestens einen Parameter aufweist;
- eine Infrastruktur eingerichtet zum Betreiben (101) der herkömmlichen Blockchain in der in sich geschlossenen netzwerktechnisch eingerichteten Infrastruktur aufweisend Netzwerkknoten, wobei die herkömmliche Blockchain redundant auf mindestens eine Teilmenge der Netzwerkknoten verteilt (102) wird;
- eine Anfrageeinheit eingerichtet zum Erstellen (103) einer Löschanfrage mindestens eines Blocks der herkömmlichen Blockchain durch einen Netzwerkknoten, welche an weitere Netzwerkknoten übermittelt (104) wird;
- eine Blockchaineinheit eingerichtet bei einem positiven Bescheiden (105) der Löschanfrage durch die Netzwerkknoten gemäß einer Bescheidungsmetrik zum Erstellen (106) einer gesonderten Blockchain, aufweisend mindestens einen Block mit einem Löscheintrag, wobei jeweils jeder Block der gesonderten Blockchain eine Referenz auf jeweils einen zu löschenden Block der herkömmlichen Blockchain aufweist; und
- eine Löscheinheit eingerichtet zum Ausführen (107) der Löschanfrage gemäß der gesonderten Blockchain durch die entsprechenden Netzwerkknoten, wobei die herkömmliche Blockchain mittels einer Schnittstelle in die geschlossene Infrastruktur importiert wird; die Blöcke der herkömmlichen Blockchain jeweils auf ein Dokument verweisen, welches bei einer entsprechenden Löschanfrage für die Bearbeitung gesperrt wird und die geschlossene netzwerktechnisch eingerichtete Infrastruktur technisch von einem weiteren angeschlossenen Netzwerk getrennt ist..

11. Computerprogrammprodukt, umfassend Befehle, die bei der Ausführung des Programms durch mindestens einen Computer diesen veranlassen, die Schritte des Verfahrens nach einem der Ansprüche 1 bis 9 auszuführen.

12. Computerlesbares Speichermedium, umfassend Befehle, die bei der Ausführung durch mindestens einen Computer diesen veranlassen, die Schritte des Verfahrens nach einem der Ansprüche 1 bis 9 auszuführen. wird ein Computerprogrammprodukt mit Steuerbefehlen vorgeschlagen, welche das vorgeschlagene Verfahren implementieren beziehungsweise die vorgeschlagene Vorrichtung und Anordnung betreiben.
